# EUROPEAN PATENT APPLICATION

(11) **EP 4 757 038 A1**
(43) Date of publication of application: **10.06.2026**
(21) Application number: 24848895.9
(22) Date of filing: 16.07.2024
(51) Int. Cl.: H01M 50/291, F16L 59/02, H01M 10/625, H01M 10/658, H01M 10/6557, H01M 50/204, H01M 50/227, H01M 50/293

(54) **HEAT TRANSFER SUPPRESSION MEMBER AND BATTERY PACK**

(30) Priority: 31.07.2023 JP 2023124841
(71) Applicant: IBIDEN CO., LTD., Ogaki-shi, Gifu 503-8604 (JP)
(72) Inventor: HAN Mingxu, Ibi-gun, Gifu 501-0695 (JP)
(74) Representative: Hoffmann Eitle
(86) International application number: PCT/JP2024/025451
(87) International publication number: WO 2025/028239

(57) **Abstract**

To provide a heat transfer suppression member capable of suppressing breakage of a battery case and a decrease in battery performance due to deformation of a battery cell while ensuring an interval between battery cells, and capable of suppressing propagation of heat between the battery cells at an abnormal state, and a battery pack capable of suppressing breakage of a battery case and a decrease in battery performance while suppressing propagation of heat between the battery cells. A heat transfer suppression member (50) includes a frame body (53) surrounding an outer periphery in a planar view, and a sheet-shaped heat insulation material (10) disposed in an inside of the frame body (53) and having a pair of main surfaces (10s). A thickness of the heat insulation material (10) is smaller than a thickness of the frame body (53) in a section view orthogonal to the planar view of the heat transfer suppression member (50).

## Description

### TECHNICAL FIELD

The present invention relates to a heat transfer suppression member and a battery pack including the heat transfer suppression member.

### BACKGROUND ART

In recent years, from the viewpoint of environmental protection, an electric vehicle or a hybrid vehicle driven by an electric motor has been actively developed. The electric vehicle or the hybrid vehicle is equipped with a battery pack in which a plurality of battery cells are connected in series or in parallel to serve as a power source for a driving electric motor.

In addition, a lithium ion secondary battery, which has higher capacity and is capable of higher output than a lead-acid battery, a nickel-metal hydride battery, or the like, is mainly used for the battery cells. In the case where a certain battery cell suddenly rises in temperature due to an internal short circuit or overcharging of the battery, and then causes thermal runaway that continues to generate heat (that is, in the case of "an abnormal state"), the heat from the battery cell that has experienced thermal runaway may propagate to other adjacent battery cells, thereby causing thermal runaway in other battery cells. When the thermal runaway occurs in the battery cell, a gas is generated inside the battery, and an internal pressure increases to cause deformation of the battery cell.

As a countermeasure against the occurrence of thermal runaway as described above, for example, Patent Literature 1 discloses a heat transfer suppression sheet that has an excellent heat transfer suppression effect and that can maintain a high heat insulation performance by suppressing a decrease in thickness of a heat insulation material even when a battery cell expands. The heat transfer suppression sheet described in Patent Literature 1 contains a first heat insulation material and a second heat insulation material, and a thermal conductivity of the first heat insulation material is lower than a thermal conductivity of the second heat insulation material. In addition, a compressive strength of the second heat insulation material is higher than a compressive strength of the first heat insulation material, and the first heat insulation material is sandwiched by the plurality of second heat insulation materials.

In addition, Patent Literature 2 proposes a heat insulation material in which deterioration of the thermal conductivity is suppressed by retaining a structure of the heat insulation material against a compressive stress. The heat insulation material described in Patent Literature 2 includes a composite layer containing a fiber and silica aerogel, and a resin support disposed in the composite layer in a thickness direction.

Both the heat transfer suppression sheet and the heat insulation material described in Patent Literatures 1 and 2 are intended to prevent the heat insulation material from being compressed to narrow a void between battery cells, thereby suppressing a decrease in thermal conductivity.

### CITATION LIST

### PATENT LITERATURE

Patent Literature 1: JP2020-187869A
Patent Literature 2: JP2017-215014A

### SUMMARY OF INVENTION

### TECHNICAL PROBLEM

However, in the case where the deformation of the battery cell due to the thermal runaway is large, when a heat insulation material having a high compressive strength or a resin support is disposed in a region where the battery cell and the heat insulation material are in contact with each other as in Patent Literatures 1 and 2, a repulsive force is generated with respect to the battery cell. During the thermal runaway of the battery cell, since a central region in a main surface is most likely to be deformed, when an interval between the cells in the central region is fixed by the heat insulation material, the outermost battery cell in a plurality of connected battery cells is pressed toward a battery case. As a result, the pressed battery cell or case may be broken. In addition, even in the case where a charge and discharge cycle is performed on battery cells formed into a battery pack (that is, in the case of "normal use"), the battery cell is slightly deformed. Therefore, when an internal pressure of the battery cell repeatedly increases and decreases during charging and discharging, the battery cell is repeatedly pressed and relaxed by the case and the heat insulation material, which causes a decrease in battery performance.

In addition, the use of electric vehicles, hybrid vehicles, and the like is rapidly expanding, and in order to ensure high safety, development of a heat insulation member having a more excellent heat insulation property is required.

The present invention has been made in view of the above problems, and an object of the present invention is to provide a heat transfer suppression member capable of suppressing breakage of a battery case and a decrease in battery performance due to deformation of a battery cell while ensuring an interval between battery cells, and capable of suppressing propagation of heat between the battery cells at an abnormal state, and a battery pack capable of suppressing breakage of a battery case and a decrease in battery performance while suppressing propagation of heat between the battery cells.

### SOLUTION TO PROBLEM

The above object of the present invention is achieved by the following configuration [1] relating to a heat transfer suppression member.
[1] A heat transfer suppression member including:
   a frame body surrounding an outer periphery in a planar view; and
   a sheet-shaped heat insulation material disposed in an inside of the frame body and having a pair of main surfaces, in which
   a thickness of the heat insulation material is smaller than a thickness of the frame body in a section view orthogonal to the planar view.
   Preferred embodiments of the present invention relating to the heat transfer suppression member relate to the following [2] to [15].
[2] The heat transfer suppression member according to [1], further including: a film covering the main surfaces of the heat insulation material.
[3] The heat transfer suppression member according to [2], in which a void portion is provided between at least one main surface of the pair of main surfaces and the film.
[4] The heat transfer suppression member according to [1], further including: an elastic material stacked on at least one main surface of the pair of main surfaces of the heat insulation material, in which a thickness of a stacked body of the heat insulation material and the elastic material is substantially same as the thickness of the frame body or smaller than the thickness of the frame body in the section view.
[5] The heat transfer suppression member according to [4], in which
   the stacked body has a pair of outer main surfaces orthogonal to a thickness direction, and
   the heat transfer suppression member includes a film covering the pair of outer main surfaces.
[6] The heat transfer suppression member according to [5], in which a void portion is provided between at least one outer main surface of the pair of outer main surfaces and the film.
[7] The heat transfer suppression member according to [4] or [5], in which the elastic material contains at least one kind selected from a synthetic rubber, a natural rubber, and a thermoplastic elastomer.
[8] The heat transfer suppression member according to any one of [1] to [7], further including:
   a partition wall configured to divide the inside of the frame body into a plurality of regions; and
   a plurality of the heat insulation materials disposed in the plurality of regions.
[9] The heat transfer suppression member according to [8], in which the plurality of heat insulation materials include a first heat insulation material and a second heat insulation material having different properties.
[10] The heat transfer suppression member according to [9], in which an elastic modulus of the first heat insulation material is smaller than an elastic modulus of the second heat insulation material.
[11] The heat transfer suppression member according to [10], in which the first heat insulation material is disposed in a region including a center of the plurality of regions.
[12] The heat transfer suppression member according to any one of [8] to [11], in which in the planar view, a width of the partition wall in a direction orthogonal to a longitudinal direction is smaller than a width of the frame body in a direction orthogonal to a longitudinal direction.
[13] The heat transfer suppression member according to any one of [8] to [12], in which the partition wall contains an insulating material as a main material.
[14] The heat transfer suppression member according to any one of [1] to [13], in which the frame body contains an insulating material as a main material.
[15] The heat transfer suppression member according to any one of [1] to [12], in which the heat insulation material contains an inorganic particle and an organic fiber.
   The above object of the present invention is also achieved by the following configuration [16] relating to a battery pack.
[16] A battery pack including: a plurality of battery cells; and the heat transfer suppression member according to any one of [1] to [15], in which the plurality of battery cells are connected in series or in parallel.

### ADVANTAGEOUS EFFECTS OF INVENTION

Since the heat transfer suppression member according to the present invention includes the frame body surrounding the outer periphery, the interval between the battery cells can be ensured. In addition, since the heat insulation material is disposed in the inside of the frame body and the thickness of the heat insulation material is formed to be smaller than the thickness of the frame body, it is possible to suppress the breakage of the battery case and the decrease in battery performance due to the deformation of the battery cell, and it is possible to suppress the propagation of heat between the battery cells at an abnormal state.

Since the battery pack according to the present invention includes the heat transfer suppression member, it is possible to obtain a battery pack capable of suppressing the breakage of the battery case and the decrease in battery performance while suppressing the propagation of heat between the battery cells, and maintaining an excellent battery performance.

### BRIEF DESCRIPTION OF DRAWINGS

[Fig. 1A] Fig. 1A is a plan view showing a heat transfer suppression member according to a first embodiment of the present invention.
[Fig. 1B] Fig. 1B is a cross-sectional view taken along a line I-I in Fig. 1A.
[Fig. 2] Fig. 2 is a cross-sectional view schematically showing a battery pack including the heat transfer suppression sheet according to the first embodiment of the present invention.
[Fig. 3] Fig. 3 is a cross-sectional view showing a heat transfer suppression member according to a second embodiment of the present invention.
[Fig. 4] Fig. 4 is a cross-sectional view showing a heat transfer suppression member according to a third embodiment of the present invention.
[Fig. 5A] Fig. 5A is a plan view showing a heat transfer suppression member according to a fourth embodiment of the present invention.
[Fig. 5B] Fig. 5B is a cross-sectional view taken along a line II-II in Fig. 5A.
[Fig. 6] Fig. 6 is a plan view showing a first modification of the heat transfer suppression member according to the fourth embodiment of the present invention.
[Fig. 7] Fig. 7 is a plan view showing a second modification of the heat transfer suppression member according to the fourth embodiment of the present invention.
[Fig. 8] Fig. 8 is a photograph substituted for a drawing showing Structure Example 1 of a heat insulation material for use in the heat transfer suppression member according to the embodiment of the present invention.
[Fig. 9] Fig. 9 is a photograph substituted for a drawing showing an enlarged view of a portion of the heat insulation material shown in Fig. 8.
[Fig. 10] Fig. 10 is a photograph substituted for a drawing showing Structure Example 2 of the heat insulation material for use in the heat transfer suppression member according to the embodiment of the present invention.
[Fig. 11] Fig. 11 is a schematic diagram showing Structure Example 3 of the heat insulation material for use in the heat transfer suppression member according to the embodiment of the present invention.
[Fig. 12] Fig. 12 is a schematic diagram showing an enlarged view of a portion in Fig. 11.
[Fig. 13] Fig. 13 is a photograph substituted for a drawing showing the heat insulation material shown in Fig. 11.
[Fig. 14] Fig. 14 is a photograph substituted for a drawing showing Structure Example 4 of the heat insulation material for use in the heat transfer suppression member according to the embodiment of the present invention.
[Fig. 15] Fig. 15 is a photograph substituted for a drawing showing an enlarged structure of the heat insulation material shown in Fig. 14.
[Fig. 16] Fig. 16 is a photograph substituted for a drawing showing a cross section of the heat insulation material shown in Fig. 14.
[Fig. 17] Fig. 17 is a schematic diagram showing Structure Example 5 of the heat insulation material for use in the heat transfer suppression member according to the embodiment of the present invention.
[Fig. 18] Fig. 18 is a schematic diagram showing an enlarged view of a portion A of the heat insulation material shown in Fig. 17.
[Fig. 19] Fig. 19 is a photograph substituted for a drawing showing Structure Example 6 of the heat insulation material for use in the heat transfer suppression member according to the embodiment of the present invention.
[Fig. 20] Fig. 20 is a photograph substituted for a drawing showing another region of the heat insulation material shown in Fig. 19.
[Fig. 21] Fig. 21 is a photograph substituted for a drawing showing a cross section of the heat insulation material shown in Figs. 19 and 20.
[Fig. 22] Fig. 22 is a photograph substituted for a drawing showing Structure Example 7 of the heat insulation material for use in the heat transfer suppression member according to the embodiment of the present invention.
[Fig. 23] Fig. 23 is a photograph substituted for a drawing showing an enlarged view of a portion of the heat insulation material shown in Fig. 22.
[Fig. 24] Fig. 24 is a schematic diagram illustrating an example of a method for defining a length of a fiber bundle.
[Fig. 25] Fig. 25 is a photograph substituted for a drawing showing another Structure Example of the heat insulation material shown in Fig. 22.

### DESCRIPTION OF EMBODIMENTS

The present inventors have conducted intensive studies to obtain a heat transfer suppression member capable of suppressing an unnecessary pressure from being to a battery cell and preventing a decrease in battery performance while maintaining a desired heat insulation property. As a result, it has been found that the above problem can be solved by disposing a heat insulation material in an inside of a frame body surrounding an outer periphery and making a thickness of the heat insulation material smaller than a thickness of the frame body. That is, by disposing the heat insulation material thinner than the frame body in the inside of the frame body while ensuring an interval between battery cells by the frame body, it is possible to ensure an escape place for expansion of the battery cells, and to reduce the pressure applied to the battery cells when the battery cells expand.

Hereinafter, a heat transfer suppression member, a production method therefor, and a battery pack according to an embodiment of the present invention will be described in detail. Note that, the present invention is not limited to the embodiments described below, and can be freely changed and implemented without departing from the gist of the present invention. First, the heat transfer suppression member according to the embodiment of the present invention will be described.

### [Heat Transfer Suppression Member]

### [First Embodiment]

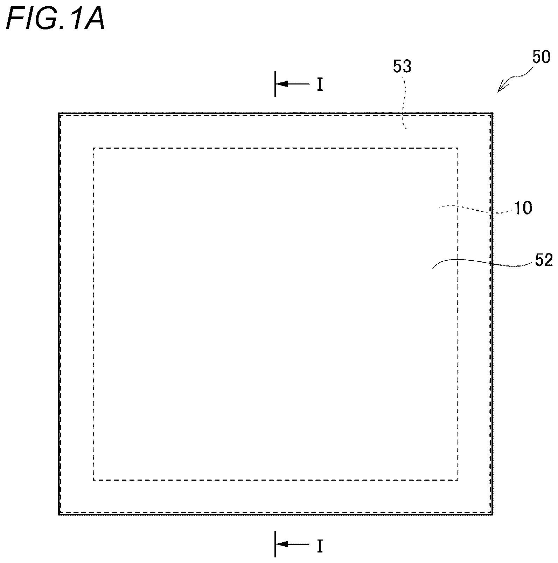

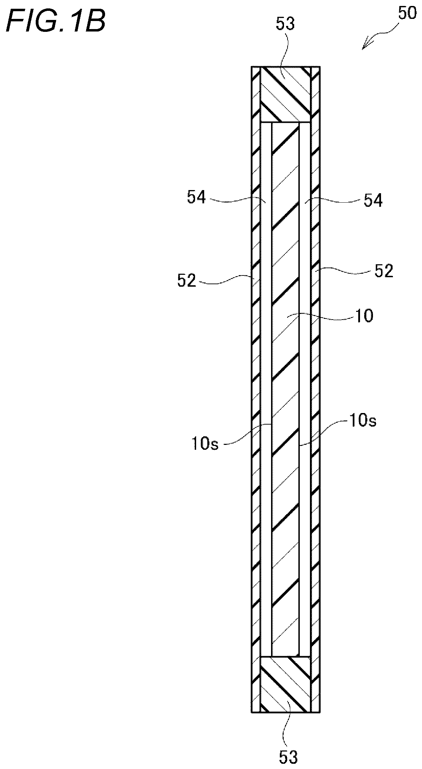

Fig. 1A is a plan view showing a heat transfer suppression member according to a first embodiment of the present invention, and Fig. 1B is a cross-sectional view taken along a line I-I thereof. As shown in Figs. 1A and 1B, a heat transfer suppression member 50 according to the first embodiment includes a frame body 53 surrounding an outer periphery in a planar view, a sheet-shaped heat insulation material 10 disposed in an inside of the frame body 53 and having a pair of main surfaces 10s, and a film 52 attached to a surface of the frame body 53 parallel to the main surfaces of the heat insulation material 10. The "planar view" in the description of the present application indicates a view in which the heat transfer suppression member is viewed from above when the main surfaces of the heat insulation material 10 are disposed in an up-down direction. In addition, a "section view" refers to a view in which a cross section of the heat transfer suppression member is viewed from a direction orthogonal to the planar view. In the present embodiment, a thickness of the heat insulation material 10 is formed to be smaller than a thickness of the frame body 53. Therefore, a void portion 54 is formed between the film 52 and the main surface 10s on both sides of the heat insulation material 10.

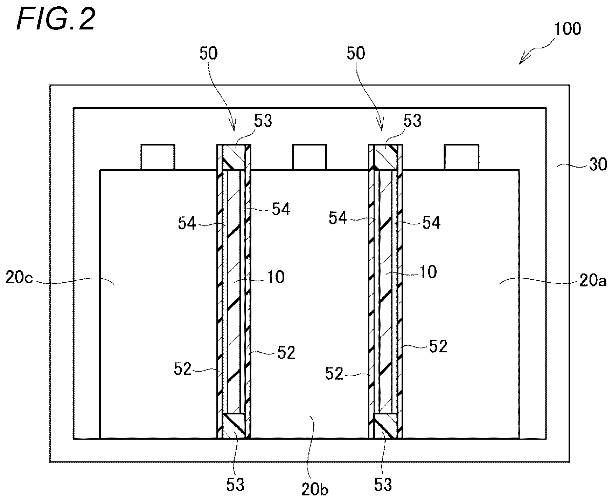

A specific usage form of the heat transfer suppression member 50 according to the first embodiment will be described below. Fig. 2 is a cross-sectional view schematically showing a battery pack including the heat transfer suppression sheet according to the first embodiment of the present invention. As shown in Fig. 2, the heat transfer suppression member 50 can be used such that the heat transfer suppression member 50 is interposed between a plurality of battery cells 20a, 20b, and 20c. A battery pack 100 is formed by housing the plurality of battery cells 20a, 20b, and 20c in a battery case 30 in a state where the battery cells 20a, 20b, and 20c are connected in series or in parallel (the connected state is not shown). Note that, the battery cells 20a, 20b, and 20c are, for example, preferably a lithium ion secondary battery, but is not particularly limited thereto, and may be applied to other secondary batteries.

In the heat transfer suppression member 50 according to the first embodiment configured in this manner, the frame body 53 is disposed between the battery cell 20a and the battery cell 20b and between the battery cell 20b and the battery cell 20c. Therefore, by adjusting the thickness of the frame body 53, it is possible to ensure a desired interval between the battery cells. The heat insulation material 10 having a thickness smaller than that of the frame body 53 is disposed in the inside of the frame body 53. Therefore, although the film 52 is present between the heat insulation material 10 and the battery cells 20a, 20b, and 20c, the void portion 54 is formed. When the battery cells 20a, 20b, and 20c expand, generally, a central portion of the main surface having the largest area in the battery cells 20a, 20b, and 20c protrudes, and thus, when the battery cells 20a, 20b, and 20c expand, the void portion 54 serves as an escape place for the expansion. Therefore, it is possible to suppress an unnecessary pressure from being to the battery cells 20a, 20b, and 20c, and to suppress a decrease in battery performance.

In addition, the heat insulation material 10 has a predetermined heat insulation property, but in the present embodiment, since the void portion 54 is provided between the heat insulation material 10 and the film 52 and air is present in the void portion 54, it is possible to obtain a more excellent heat insulation effect by the air.

Further, in the present embodiment, since the film 52 covers the main surfaces 10s of the heat insulation material 10, in the case where the heat insulation material 10 contains, for example, an inorganic particle or the like, it is possible to prevent the inside of the battery case 30 from being contaminated by falling off of the inorganic particle, that is, powder falling.

Note that, in the present embodiment, the film 52 is thermally fused to a part of the frame body 53, and accordingly, the film 52 covers the main surfaces 10s of the heat insulation material 10, but the configuration of the film 52 is not limited thereto in the present invention. For example, the film 52 may be disposed to entirely cover the frame body 53 and the heat insulation material 10, or the film 52 may be disposed to cover only the heat insulation material 10 and a void may be formed between the film 52 and the battery cells 20a, 20b, and 20c.

In the present invention, the film 52 is not necessarily required. Even in the case where the heat transfer suppression member does not include the film 52, since the thickness of the heat insulation material 10 is formed to be smaller than the frame body 53, a step is generated between the frame body 53 and the heat insulation material 10 in the section view. Specifically, the main surface 10s of the heat insulation material 10 has a recessed shape recessed more than the frame body 53. Therefore, in the case where the heat transfer suppression member 50 is interposed between the battery cells 20a, 20b, and 20c, the void portion 54 can be ensured by the presence of the frame body 53. As a result, it is possible to prevent an unnecessary pressure from being applied to the battery cell when the battery cell expands.

### [Second Embodiment]

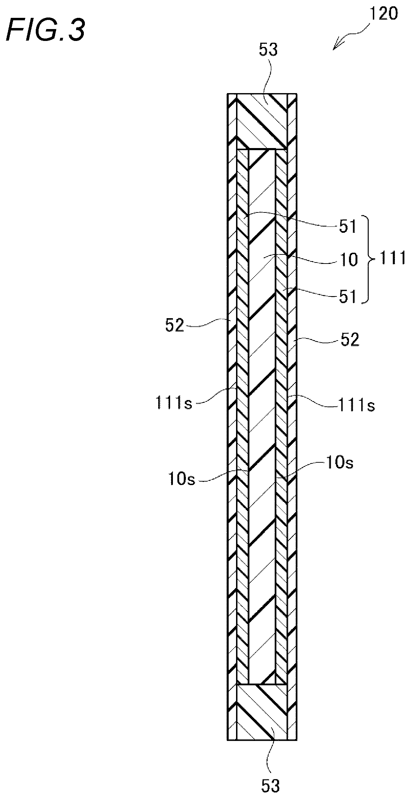

Fig. 3 is a cross-sectional view showing a heat transfer suppression member according to a second embodiment of the present invention. In a heat transfer suppression member 120 shown in Fig. 3, components same as those shown in Figs. 1A and 1B are denoted by the same reference numerals, and detailed description thereof will be omitted or simplified.

As shown in Fig. 3, the heat transfer suppression member 120 according to the second embodiment includes elastic materials 51 stacked on both the main surfaces 10s of the heat insulation material 10. That is, the heat insulation material 10 is sandwiched by a pair of elastic materials 51 and forms a stacked body 111. In addition, a thickness of the stacked body 111 is configured to be substantially the same as the thickness of the frame body 53, and the film 52 is disposed to cover outer main surfaces 111s of the stacked body 111. Therefore, both the outer main surfaces 111s of the stacked body 111 and the film 52 are in contact with each other in most parts, and no void portion is formed.

Note that, when the thickness of the stacked body 111 and the thickness of the frame body 53 are "substantially the same", a difference in thickness between the stacked body 111 and the frame body 53 is allowable up to ±5%, preferably ±3%, and more preferably ±1%, of an average value of the thickness of the stacked body 111 and the thickness of the frame body 53.

A case where the heat transfer suppression member 120 configured as described above is applied to a battery pack will be specifically described below. Here, a case where the heat transfer suppression member 120 shown in Fig. 3 is applied instead of the heat transfer suppression member 50 of the battery pack 100 shown in Fig. 2 will be described.

In the present embodiment, since the heat transfer suppression member 120 includes the frame body 53, it is also possible to ensure a desired interval between battery cells by adjusting the thickness of the frame body 53. In addition, since the elastic materials 51 are stacked on both main surfaces 10s of the heat insulation material 10 and the film 52 is present on the outer surface thereof, it is possible to further suppress powder falling in the case where the heat insulation material 10 contains an inorganic particle or the like. In particular, even in the case where the film 52 is broken at an abnormal state, contamination due to the powder falling can be prevented when the main surfaces 10s of the heat insulation material 10 are covered with the elastic materials 51.

Further, in the second embodiment, the elastic material 51 is disposed instead of the void portion 54 shown in the first embodiment. The elastic material 51 has elasticity, and in the case where the heat transfer suppression member 120 is pressed by expansion of the battery cells 20a, 20b, and 20c, the elastic material 51 is deformed by an appropriate amount, so that a repulsive force to the battery cells can be suppressed. That is, in the case where the battery cells 20a, 20b, and 20c are deformed, the elastic material 51 is flexibly deformed with respect to the deformation of the battery cells 20a, 20b, and 20c while suppressing the deformation of the battery cells 20a, 20b, and 20c. Therefore, in the heat transfer suppression member 120 according to the second embodiment, similar to the first embodiment in which the void portion 54 is formed, it is also possible to suppress a decrease in battery performance due to repeated pressing and relaxation on the battery cells 20a, 20b, and 20c.

Note that, in the second embodiment, the elastic materials 51 are stacked on both the main surfaces 10s of the heat insulation material 10, but the present invention is not limited thereto, and the elastic material 51 may be stacked to be sandwiched between the pair of heat insulation materials 10. In addition, the elastic material 51 may be stacked on only one main surface of the heat insulation material 10. In this case, the thickness of the stacked body 111 having a two-layer structure including the heat insulation material 10 and the elastic material 51 can be reduced as compared with a stacked body having a three-layer structure. Specifically, the thickness of the stacked body 111 having a two-layer structure is preferably smaller than the thickness of the frame body 53, and a position of the stacked body 111 in a thickness direction is preferably adjusted such that a void portion is formed between the other main surface of the heat insulation material 10 on which the elastic material 51 is not stacked and the battery cell.

Similar to the first embodiment, in the second embodiment, the film 52 may or may not be disposed. In the case where the stacked body 111 having a two-layer structure including the heat insulation material 10 and the elastic material 51 is used, the film 52 is preferably disposed to cover at least the main surface of the heat insulation material 10 on which the elastic material 51 is not stacked. Accordingly, both the main surfaces 10s of the heat insulation material 10 are covered with the elastic material 51 or the film 52, and an effect of suppressing powder falling can be obtained. In addition, the film 52 may be disposed to cover all of the frame body 53, the heat insulation material 10, and the elastic material 51, may be disposed to cover the stacked body 111 including the heat insulation material 10 and the elastic materials 51, or may be disposed to cover only the heat insulation material 10.

### [Third Embodiment]

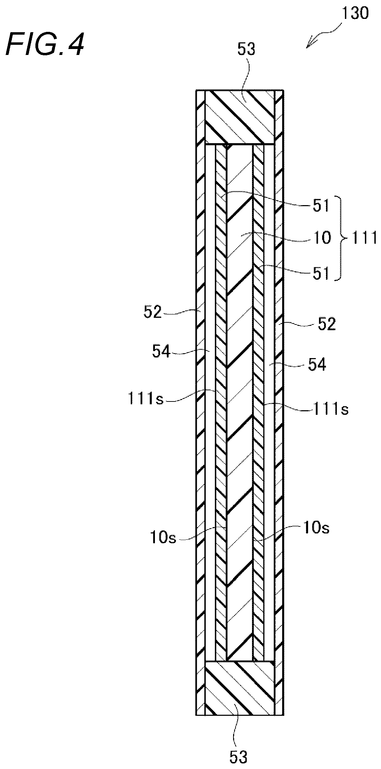

Fig. 4 is a cross-sectional view showing a heat transfer suppression member according to a third embodiment of the present invention. In a heat transfer suppression member 130 shown in Fig. 4, components same as those shown in Figs. 1B and 3 are denoted by the same reference numerals, and detailed description thereof will be omitted or simplified.

As shown in Fig. 4, in the third embodiment, the stacked body 111 including the heat insulation material 10 and the elastic materials 51 stacked on both the main surfaces 10s thereof is formed to be thinner than the frame body 53. In addition, the film 52 is disposed to cover the outer main surface 111s of the stacked body 111 via the void portion 54.

In the case where the heat transfer suppression member 130 configured as described above is applied instead of the heat transfer suppression member 50 of the battery pack 100, effects same as those in the first and second embodiments can be obtained. In addition, since the void portions 54 are provided on both outer main surfaces 111s sides of the stacked body 111, the heat insulation property can be improved as compared with the second embodiment. Note that, it is preferable that the void portion 54 is provided between at least one of the outer main surfaces 111s of the stacked body 111 and the film 52, and it is more preferable that the void portion 54 is provided between both of the outer main surfaces 111s and the film 52. In the third embodiment, the elastic material 51 may also be stacked only on one main surface 10s of the heat insulation material 10 to form the stacked body 111. The presence or absence and disposition of the film 52 are the same as those in the first and second embodiments.

### [Fourth Embodiment]

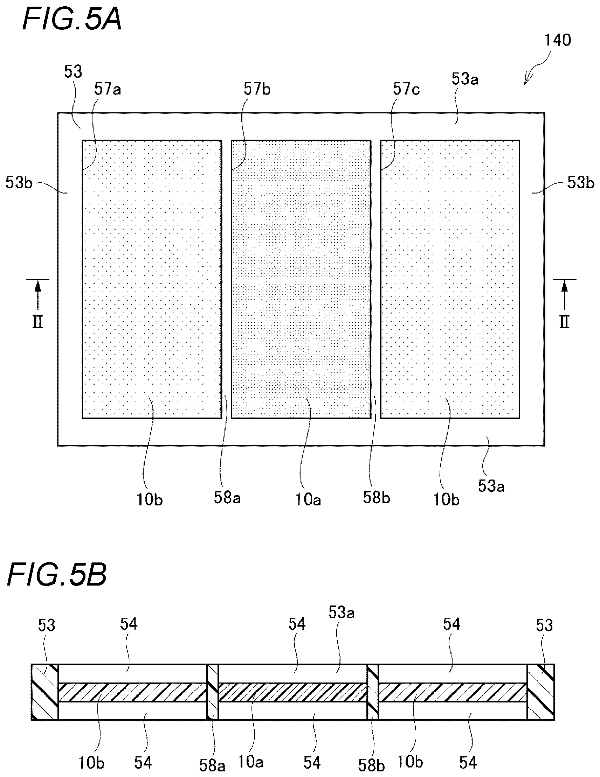

Fig. 5A is a plan view showing a heat transfer suppression member according to a fourth embodiment of the present invention, and Fig. 5B is a cross-sectional view taken along a line II-II thereof. In a heat transfer suppression member 140 shown in Figs. 5A and 5B, components same as those shown in Figs. 1A and 1B are denoted by the same reference numerals, and detailed description thereof will be omitted or simplified.

The heat transfer suppression member 140 according to the fourth embodiment includes partition walls 58a and 58b that divide the inside of the frame body 53 into a plurality of regions. More specifically, in the frame body 53, the partition wall 58a and the partition wall 58b are formed to connect a pair of frame members 53a facing each other in the up-down direction in the case where the heat transfer suppression member 140 is interposed between battery cells. Accordingly, the inside of the frame body 53 is divided into three regions of a first region 57a, a second region 57b, and a third region 57c. The second heat insulation material 10b, the first heat insulation material 10a, and the second heat insulation material 10b each having a thickness smaller than that of the frame body 53 are disposed in the first region 57a, the second region 57b, and the third region 57c, respectively. In the present embodiment, the first heat insulation material 10a is composed of a heat insulation material having an elastic modulus smaller than that of the second heat insulation material 10b.

In the case where the heat transfer suppression member 140 configured as described above is applied instead of the heat transfer suppression member 50 of the battery pack 100, the interval between the battery cells can be ensured by the frame body 53 as in the first and third embodiments. In addition, since the void portion 54 is formed between the first heat insulation material 10a and the second heat insulation material 10b, and the battery cells 20a, 20b, and 20c, even in the case where the battery cells expand, it is possible to prevent an unnecessary pressure from being applied to the battery cells. Further, it is possible to obtain a more excellent heat insulation property by air present in the void portion 54.

As described above, in the battery cells 20a, 20b, and 20c, a center is more likely to protrude due to expansion than an end portion on the widest outer surface (main surface). In addition, in general, a terminal and an exhaust valve are provided above the battery cell, and at an abnormal state, the temperature of the exhaust valve side is to likely be a high temperature, and deformation is likely to occur. Therefore, in the present embodiment, among the three divided regions (the first region 57a, the second region 57b, and the third region 57c), the first heat insulation material 10a having a small elastic modulus is disposed in the second region 57b extending vertically at the center, and the second heat insulation material 10b having an elastic modulus larger than that of the first heat insulation material 10a is disposed on both sides thereof. That is, the first heat insulation material 10a disposed in the second region 57b located at the center is softer and has a higher restoring force. Therefore, when the battery cells 20a, 20b, and 20c expand at an abnormal state and a central portion and an upper portion thereof deform, the deformation of the battery cells can be further absorbed by the first heat insulation material 10a having a small elastic modulus.

Note that, in the present embodiment, a plurality of heat insulation materials disposed in a plurality of regions divided by partition walls have elastic moduli different from each other, but heat insulation materials having properties different from each other can be used as necessary. For example, a heat insulation material having an extremely excellent heat insulation property can be disposed in a region where the temperature is the highest, and a heat insulation material in consideration of a cost and the like can be disposed in other regions. In the case where heat insulation materials having different properties are disposed in a plurality of regions, the kinds of the heat insulation materials are not limited to two kinds including the first heat insulation material 10a and the second heat insulation material 10b, and three or more kinds of heat insulation materials having different properties may be used. Further, the same elastic modulus may be disposed in all the plurality of regions. Even with such a configuration, in the present embodiment, since the thickness of the first heat insulation material 10a and the second heat insulation material 10b is smaller than the thickness of the frame body 53, it is possible to suppress an unnecessary pressure from applied to the battery cell when the battery cell expands.

In addition, by disposing the plurality of heat insulation materials in the plurality of regions, a volume per heat insulation material can be reduced, the production is facilitated, and handleability is improved. Further, it is also preferable to form the partition walls 58a and 58b such that all of the plurality of regions have substantially the same shape and size. In the heat transfer suppression member configured in this manner, even in the case where some of the heat insulation materials are broken at an abnormal state such as thermal runaway, the heat insulation material in which the breakage has not occurred can be reused as another heat transfer suppression member, and a load on the environment can be reduced.

Note that, as used herein, the "substantially the same" means that a difference in shape or size between the plurality of regions is allowable up to ±5%, preferably ±3%, and more preferably ±1% of an average value of all the plurality of regions.

In the present embodiment, similar to the first to third embodiments, the elastic material 51 may be disposed on both main surfaces of each of the first heat insulation material 10a and the second heat insulation material 10b, or the elastic material 51 may be disposed on only one main surface thereof. In addition, the elastic material 51 may be disposed to be sandwiched between a pair of heat insulation materials. Further, for example, it is also preferable that the elastic material 51 is disposed only in the first heat insulation material 10a disposed inside the second region 57b, for example, among the plurality of regions.

In addition, similar to the first to third embodiments, a film that directly or indirectly covers the surfaces of the first heat insulation material 10a and the second heat insulation material 10b may be disposed, and a method of disposing the film is not particularly limited.

### <First Modification of Fourth Embodiment>

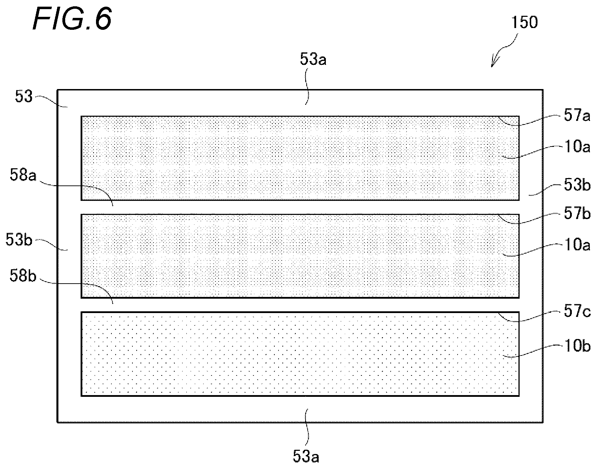

Fig. 6 is a plan view showing a first modification of the heat transfer suppression member according to the fourth embodiment of the present invention. In a heat transfer suppression member 150 shown in Fig. 6, components same as those of the heat transfer suppression member 140 shown in Fig. 5A are denoted by the same reference numerals, and detailed description thereof will be omitted or simplified.

In the first modification, in the frame body 53, the partition wall 58a and the partition wall 58b are formed to connect a pair of frame members 53b facing each other in a left-right direction in the case where the heat transfer suppression member 150 is interposed between battery cells. Accordingly, the inside of the frame body 53 is divided into three regions of the first region 57a, the second region 57b, and the third region 57c in order from the top. The first heat insulation material 10a, the first heat insulation material 10a, and the second heat insulation material 10b each having a thickness smaller than that of the frame body 53 are disposed in the first region 57a, the second region 57b, and the third region 57c, respectively. In the present embodiment, the first heat insulation material 10a is composed of a heat insulation material having an elastic modulus smaller than that of the second heat insulation material 10b.

In the case where the heat transfer suppression member 150 configured as described above is applied instead of the heat transfer suppression member 50 of the battery pack 100, effects same as those in the fourth embodiment can also be obtained. As described above, since the battery cells 20a, 20b, and 20c are likely to be deformed in the central portion of the main surface of the battery cell and the upper portion where the exhaust valve (not shown) is formed, it is preferable that the first heat insulation material 10a having a small elastic modulus is disposed in the central second region 57b and the upper first region 57a. Note that, the exhaust valve of the battery cell is not limited to being disposed on the upper portion, and may be disposed below. Therefore, when the heat transfer suppression member 150 is assembled between the battery cell 20a and the battery cell 20b and between the battery cell 20b and the battery cell 20c, a combination of the first heat insulation material 10a and the second heat insulation material 10b can be designed in consideration of the position of the exhaust valve or the like.

### <Second Modification of Fourth Embodiment>

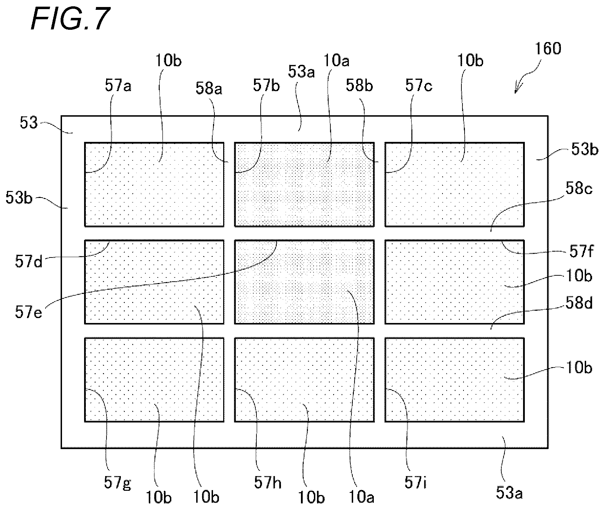

Fig. 7 is a plan view showing a second modification of the heat transfer suppression member according to the fourth embodiment of the present invention. In a heat transfer suppression member 160 shown in Fig. 7, components same as those of the heat transfer suppression member 140 shown in Fig. 5A are denoted by the same reference numerals, and detailed description thereof will be omitted or simplified.

In the second modification, in the frame body 53, the partition wall 58a and the partition wall 58b are formed to connect the pair of frame members 53a facing each other in the up-down direction in the case where the heat transfer suppression member 160 is interposed between battery cells. In addition, a partition wall 58c and a partition wall 58d are formed to connect the pair of frame members 53b facing each other in the left-right direction of the heat transfer suppression member 160. Accordingly, the inside of the frame body 53 is divided into nine regions of the first region 57a, the second region 57b, the third region 57c, a fourth region 57d, a fifth region 57e, a sixth region 57f, a seventh region 57g, an eighth region 57h, and a ninth region 57i in order from an upper left side to a right side in Fig. 7. The first heat insulation material 10a having a thickness smaller than that of the frame body 53 is disposed in the second region 57b and the fifth region 57e. In addition, the second heat insulation material 10b having a thickness smaller than that of the frame body 53 is disposed in regions other than the above regions. In the present embodiment, the first heat insulation material 10a is composed of a heat insulation material having an elastic modulus smaller than that of the second heat insulation material 10b.

In the case where the heat transfer suppression member 160 configured as described above is applied instead of the heat transfer suppression member 50 of the battery pack 100, effects same as those in the fourth embodiment can also be obtained. In the present embodiment, the first heat insulation material 10a having a small elastic modulus is disposed in the fifth region 57e at a center facing the position where the battery cells 20a, 20b, and 20c are likely to be deformed and the second region 57b above the fifth region 57e. That is, in the region where the battery cell is likely to be deformed, a void portion is present between the first heat insulation material 10a and the battery cell, and the elastic modulus of the first heat insulation material 10a is small, so that an unnecessary pressure applied to the battery cell can be further reduced.

In addition, since the heat insulation material is disposed in each of the nine divided regions, various heat insulation materials can be designed in combination as necessary, and a degree of freedom in design can be improved. Further, in the heat transfer suppression member 160 divided into nine parts, since the size of each heat insulation material is reduced, there is a high possibility that the heat insulation material in which breakage has not occurred can be reused at an abnormal state such as thermal runaway, and the load on the environment can be further reduced.

Note that, in the heat transfer suppression members 140, 150, and 160 including the partition walls, the first heat insulation material 10a having a small elastic modulus is preferably disposed in at least the central region among the plurality of regions divided by the partition walls. In the case where the heat transfer suppression members 140, 150, and 160 are disposed between the battery cells 20a, 20b, and 20c, the first heat insulation material 10a is preferably disposed in the vicinity of the exhaust valves of the battery cells 20a, 20b, and 20c.

In addition, the partition wall has a function of dividing the inside of the frame body into a plurality of regions, but when the partition wall is present in the vicinity of the center of the heat transfer suppression member in a planar view, the partition wall serves as a resistance during charging and discharging of the battery cell or the like, and pressing and relaxation on the battery cell are repeated, which causes a decrease in battery performance. Therefore, it is preferable that the partition wall is not present in the center of the inside of the frame body or in a region close to the center. Referring to Fig. 7, in the case where the pair of frame members 53a facing each other in the up-down direction are connected by the partition wall, it is preferable to form the partition wall to equally divide the region in the inside of the frame body 53 by the partition wall in consideration of the possibility of reuse of the heat insulation material. At this time, in order to prevent the partition wall from being present in the center of the inside of the frame body or in a region close to the center, it is preferable to connect the pair of frame members 53a facing each other by an even number of partition walls. In the case where the partition wall is formed between the pair of frame members 53b facing each other in the left-right direction, it is preferable to connect the frame members 53b by an even number of partition walls.

Widths of the partition wall 58a to the partition wall 58d in the heat transfer suppression members 140, 150, and 160 are not particularly limited. However, depending on a material constituting the partition wall, the heat insulation property may be inferior to that of the first heat insulation material 10a and the second heat insulation material 10b. In addition, in the case where the partition wall contains, for example, a resin material as a main material, when the temperature around the heat transfer suppression member is extremely high at an abnormal state, the resin material burns and disappears. In such a case, in order to maintain the heat insulation property of the heat insulation material, the width of the partition wall in a direction orthogonal to a longitudinal direction in the planar view is preferably small. Specifically, the width of the partition wall 58a to the partition wall 58d in the direction orthogonal to the longitudinal direction is preferably smaller than a width of the frame body 53 in a direction orthogonal to a longitudinal direction.

Hereinafter, materials constituting the heat transfer suppression member according to the present embodiment will be described.

### <Frame Body>

The frame body has an effect of ensuring an interval between adjacent battery cells in a normal state. Therefore, the frame body preferably contains an insulating material as a main material, and more preferably composed of a material having appropriate hardness and heat insulation property. As the main material constituting the frame body, for example, at least one kind of insulating material selected from a resin material, an oxide-based ceramic, a non-oxide-based ceramic, a silicate mineral such as mica, and a synthetic material of a resin and a ceramic is preferably used as the main material. Among these, it is more preferable to use a resin material as the main material since processability is excellent in addition to properties such as hardness and a heat insulation property.

Note that, the form of the frame body is not particularly limited as long as it exhibits the above effects, and may be formed of, for example, a mat material of an inorganic fiber.

### <Partition Wall>

In the case where the heat transfer suppression member according to the present embodiment includes the partition wall, the partition wall has an effect of dividing the inside of the frame body into a plurality of regions and retaining a plurality of heat insulation materials together with the frame body. Therefore, similar to the frame body, the partition wall preferably contains an insulating material as a main material, and more preferably composed of a material having appropriate hardness and heat insulation property. That is, the main material of the partition wall is preferably at least one kind of insulating material selected from a resin material, an oxide-based ceramic, a non-oxide-based ceramic, a silicate mineral such as mica, and a synthetic material of a resin and a ceramic. In addition, the partition wall more preferably contains a resin material as the main material from the viewpoint of the hardness, the heat insulation property, the processability, and the like. Note that, the frame body and the partition wall may be integrally molded or may be formed by combining a plurality of members. The materials thereof may be the same material or different materials.

Note that, the form of the partition wall is not particularly limited as long as it exhibits the above effects, and may be formed of, for example, a mat material of an inorganic fiber.

### <Heat Insulation Material>

The heat insulation material is not particularly limited as long as a desired heat insulation effect can be obtained. A thermal conductivity can be mentioned as an indicator indicating the heat insulation effect. In the present embodiment, the thermal conductivity of the heat insulation material is preferably less than 1 (W/m·K), more preferably less than 0.5 (W/m·K), and still more preferably less than 0.2 (W/m·K). Further, the thermal conductivity of the heat insulation material is even more preferably less than 0.1 (W/m·K), even still more preferably less than 0.05 (W/m·K), and particularly preferably less than 0.02 (W/m·K). As the heat insulation material capable of obtaining a desired heat insulation effect, for example, a heat insulation material containing a silicon-based rubber and aerogel, a heat insulation material containing a fiber and aerogel, a heat insulation material containing an inorganic particle and an organic fiber, or the like can be used. Note that, the thermal conductivity of the heat insulation material can be measured in accordance with "Testing method for thermal conductivity of refractories" described in JIS R 2251.

### (Size of Heat Insulation Material)

In the case of stacking the heat insulation material and the elastic material, a size of a main surface of the heat insulation material and a size of a main surface orthogonal to a thickness direction of the elastic material may be substantially the same, or the elastic material may be formed to be smaller than the heat insulation material.

Note that, as used herein, the "substantially the same" means that a difference in size between the two main surfaces is allowable up to ±5%, preferably ±3%, and more preferably ±1%, of an average value thereof.

### (Heat Insulation Material Containing Silicon-based Rubber and Aerogel)

Examples of the heat insulation material containing a silicon-based rubber and aerogel include a material impregnated with SiO₂ having a silicon-based rubber as a framework. As the silicon-based rubber, silicone and a rubber having a heat-resistant temperature of 170°C or higher can be used. Note that, since the aerogel has a large number of cavities, an excellent heat insulation property can be obtained.

### (Heat Insulation Material Containing Fiber and Aerogel)

Examples of the heat insulation material containing a fiber and aerogel include a material impregnated with SiO₂ having a fiber as a framework. As the fiber, a polyacrylonitrile (PAN) fiber, a glass fiber, a ceramic fiber, or the like can be used. Note that, since the aerogel has a large number of cavities, an excellent heat insulation property can be obtained.

### (Heat Insulation Material Containing Inorganic Particle and Organic Fiber)

When the heat insulation material having the following structure is particularly used as the heat insulation material containing an inorganic particle and an organic fiber, a more excellent heat insulation property can be obtained as compared with the heat insulation material containing a fiber and aerogel. An example of such a specific heat insulation material will be described in detail below.

### <Heat Insulation Material (Structure Example 1)>

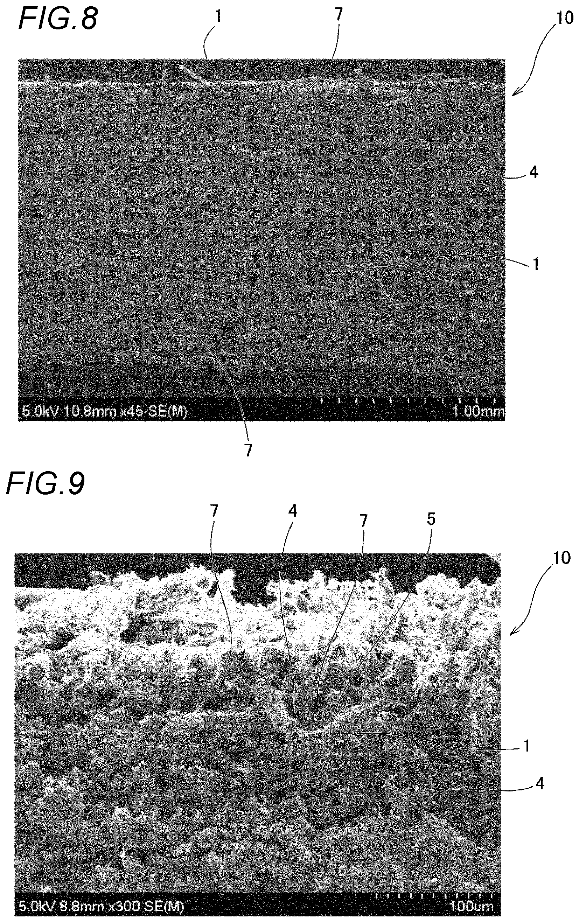

Fig. 8 is a photograph substituted for a drawing showing Structure Example 1 of a heat insulation material for use in the heat transfer suppression member according to the embodiment of the present invention. Fig. 9 is a photograph substituted for a drawing showing an enlarged view of a portion of the heat insulation material shown in Fig. 8.

As shown in Figs. 8 and 9, the heat insulation material 10 contains an inorganic particle 4 and an organic fiber 1. In addition, the heat insulation material 10 includes a plurality of three-dimensionally connected pores 7 between the inorganic particle 4 and the organic fiber 1. Note that, the organic fiber 1 includes a fusion portion 5 covering at least a portion of a surface thereof, and at least a portion of the inorganic particle 4 is fused to the surface of the organic fiber 1 by the fusion portion 5. Accordingly, the surface of the organic fiber 1 is covered with the inorganic particle 4.

Since the heat insulation material 10 configured in this manner includes the three-dimensionally connected pores 7, an air heat insulation effect can be obtained, and a heat insulation performance can be further improved. In addition, since the heat insulation material 10 contains the organic fiber 1 having high flexibility, the flexibility of the heat insulation material 10 can be improved, the organic fibers 1 are likely to be entangled with each other, and an effect of improving a strength of the heat insulation material can be obtained. Therefore, it is possible to suppress breakage of the heat transfer suppression member including such a heat insulation material 10. Further, since a cushioning property of the entire sheet is improved by the presence of the pores 7 in the heat insulation material 10, when the battery cells 20a, 20b, and 20c expand during charging and discharging, the expanded portion can be absorbed by the void portion 54, and the expanded portion of the battery cell can also be absorbed by the heat insulation material 10, so that it is possible to further suppress a decrease in performance of the battery cell.

Further, in the present embodiment, it is preferable that at least some of the pores 7 communicate with the surface of the heat insulation material 10 and open towards the outside. Once the pores 7 are configured in this manner, when an adjacent battery cell 20a, 20b, or 20c experiences thermal runaway, even in the case where the heat insulation material 10 reaches a high temperature and the organic fiber 1 is decomposed, a decomposition gas does not remain inside the sheet but is released to the outside through the pores 7. Therefore, from this viewpoint, an effect of preventing the sheet from being broken can be also obtained.

When the fusion portion 5 on an outer peripheral surface of the organic fiber 1 fixes the inorganic particle 4 to the organic fiber 1, it is possible to obtain an effect of suppressing the inorganic particle 4 from falling off (powder falling). Therefore, for example, even in the case where a portion of the battery cells 20a, 20b, and 20c expands and a compressive stress or impact is applied to the heat transfer suppression member 50, an effect of retaining a shape of the heat insulation material 10 can be further improved, and a decrease in heat insulation effect due to compressive deformation of the heat insulation material 10 can be prevented.

In the present description, the "fusion portion 5" refers to a portion where the surface of the organic fiber 1 has melted and then solidified again, and is formed during a process of producing the heat insulation material 10, which will be described later. In the present embodiment, since the inorganic particle 4 is fused to the surface of the organic fiber 1 by the fusion portion 5, an apparent fiber diameter of the organic fiber 1 is larger, the shape of the heat insulation material 10 can be supported, and a high strength can be obtained.

Note that, the fusion portion 5 does not need to completely cover the outer peripheral surface of the organic fiber 1, and there may be a region where the fusion portion 5 is not present. In the heat insulation material 10, as a material for the organic fiber 1, a binder fiber having a core-sheath structure, which will be described later, can be used. However, when a sheath portion is peeled off during the production process, the organic fiber 1, which is a core portion, may be partially exposed. Even in such a case, the effect of retaining the inorganic particle 4 can be sufficiently obtained.

Further, the heat insulation material 10 preferably contains an inorganic fiber. An effect obtained by containing the inorganic fiber will be described in the following "Heat Insulation Material (Structure Example 2)".

### <Heat Insulation Material (Structure Example 2)>

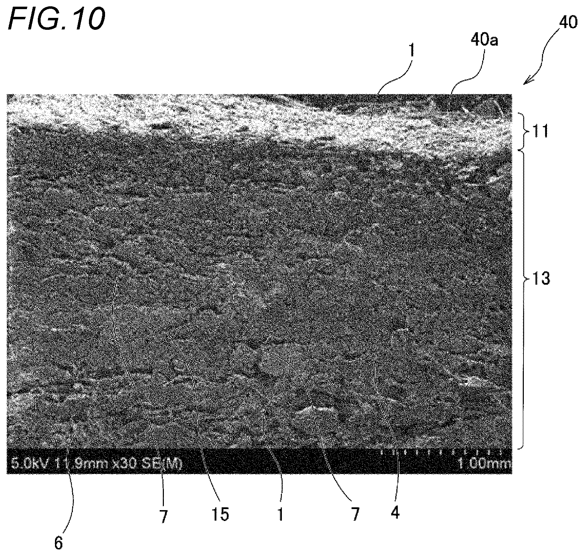

Fig. 10 is a photograph substituted for a drawing showing Structure Example 2 of the heat insulation material for use in the heat transfer suppression member according to the embodiment of the present invention. In Structure Example 2 shown in Fig. 10, components same as those in Structure Example 1 shown in Figs. 8 and 9 are denoted by the same reference numerals, and detailed description thereof will be omitted. Note that, a heat insulation material 40 shown in Fig. 10 can be used as, for example, the heat insulation material 10 of the heat transfer suppression members 50, 120, and 130 shown in Figs. 1A, 1B, 3, and 4, or the first heat insulation material 10a and the second heat insulation material 10b of the heat transfer suppression members 140, 150, and 160 shown in Figs. 5A, 5B, 6, and 7.

As shown in Fig. 10, the heat insulation material 40 contains an inorganic fiber 15. In addition, a fiber layer 11 is formed on at least a portion of a first surface 40a and a second surface (not shown) of the heat insulation material 40 that are orthogonal to a thickness direction of the heat insulation material 40. The fiber layer 11 is formed in a layer shape on the surface (first surface and second surface) of the heat insulation material 40 by at least partially fusing a plurality of organic fibers 1 to each other by the fusion portion. That is, the fiber layer 11 is a layer formed by gathering 10 or more organic fibers 1 on the surface of the heat insulation material 40, and extends in a direction substantially parallel to the surface, for example, in a stripe shape.

Further, between the fiber layer 11 and a base layer 13 containing the inorganic particle 4 and the organic fiber 1, a composite layer (not shown) in which a portion of the fiber layer 11 and a portion of the inorganic particle 4 are mixed is formed. Specifically, the composite layer is a region including a plurality of organic fibers 1 at least partially fused to each other by the fusion portion, and the inorganic particle 4 fused to the organic fiber 1 by the fusion portion.

Note that, in the heat insulation material 40 shown in Fig. 10, the inorganic fiber 15 is contained in the base layer 13 containing the inorganic particle 4 and the organic fiber 1, but may also be contained in the fiber layer 11. In Fig. 10, the inorganic fiber 15 in the fiber layer 11 is not shown since it cannot be distinguished.

Further, the heat insulation material 40 includes a fiber bundle 6 formed by at least partially fusing a plurality of organic fibers 1 to each other by the fusion portion 5. The "fiber bundle" 6 is formed by entangling 10 or more organic fibers 1 with each other and partially fusing the organic fibers 1 to each other, and is disposed in any direction in the heat insulation material 40.

The heat insulation material 40 configured in this manner contains the inorganic fiber 15 that is less likely to be decomposed even at a high temperature. Therefore, for example, in the case where the battery cell 20a experiences thermal runaway and the heat transfer suppression member 50 disposed adjacent to the battery cell 20a is exposed to a high temperature, even when the organic fiber 1 in the heat insulation material 40 is decomposed, the inorganic fiber 15 remains, so that the shape of the heat insulation material 40 can be reliably retained. In addition, since the organic fiber 1 having flexibility is likely to be entangled with the inorganic fiber 15, which is relatively hard, and a three-dimensional framework is formed by the inorganic fiber 15 and the organic fiber 1, the strength of the heat insulation material 40 can be further improved.

Further, when the heat insulation material 40 includes the fiber layer 11 on the surface and includes the fiber bundle 6 therein, a much higher strength can be obtained than the case where the organic fibers 1 are disposed in a dispersed manner. Note that, the fiber layer 11 is not simply disposed on the base layer 13, and the composite layer, in which a portion of the fiber layer 11 and a portion of the inorganic particle 4 are mixed together, is provided between the fiber layer 11 and the base layer 13, so that the fiber layer 11 is reliably restrained to the surface of the heat insulation material 40. Therefore, the fiber layer 11 alone does not fall off, and the heat insulation material 40 having a high strength can be obtained. Further, for example, when the elastic material 51 as shown in the second embodiment is stacked on the heat insulation material, a pressure applied to the base layer 13 can be further reduced.

Further, when the fiber layer 11 is formed on the surface of the heat insulation material 40, the fiber layer 11 can absorb an impact applied to the heat insulation material 40, and thus the effect of preventing the inorganic particle contained in the heat insulation material 40 from falling off can be obtained by the fiber layer 11 even in the case where the elastic material 51 is not stacked.

### <Heat Insulation Material (Structure Example 3)>

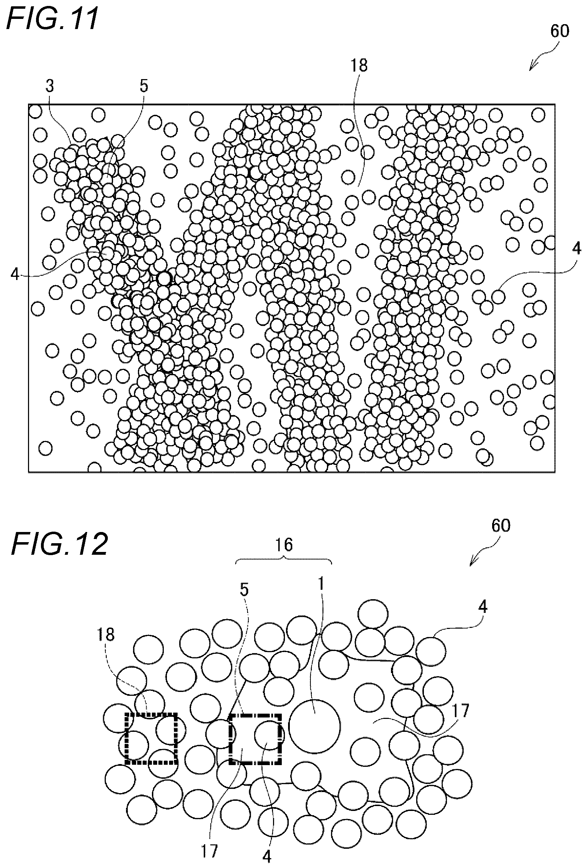

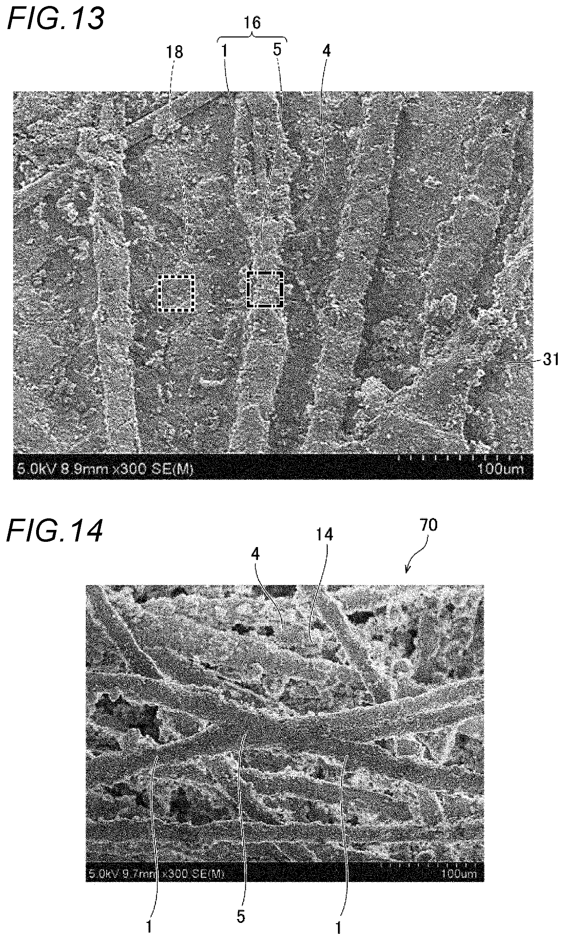

Fig. 11 is a schematic diagram showing Structure Example 3 of the heat insulation material for use in the heat transfer suppression member according to the embodiment of the present invention. Fig. 12 is a schematic diagram showing an enlarged view of a portion in Fig. 11. Fig. 13 is a photograph substituted for a drawing showing the heat insulation material shown in Fig. 11. In Structure Example 3 shown in Figs. 11 to 13, components same as those in Structure Example 1 shown in Figs. 8 and 9 are denoted by the same reference numerals, and detailed description thereof will be omitted. Note that, a heat insulation material 60 shown in Figs. 11 to 13 can be used as, for example, the heat insulation material 10 of the heat transfer suppression members 50, 120, and 130 shown in Figs. 1A, 1B, 3, and 4, or the first heat insulation material 10a and the second heat insulation material 10b of the heat transfer suppression members 140, 150, and 160 shown in Figs. 5A, 5B, 6, and 7.

As shown in Figs. 11 to 13, the heat insulation material 60 according to the present embodiment contains the inorganic particle 4, the organic fiber 1 composed of a first organic material, and the fusion portion 5 covering the outer peripheral surface of the organic fiber 1. As described above, the fusion portion 5 contains a second organic material 17 having a melting point lower than a melting point of the first organic material, and the inorganic particle 4. Note that, in the present embodiment, a binder fiber 3 having a core-sheath structure including a core portion and a sheath portion covering an outer peripheral surface of the core portion is used as the organic fiber, and the organic fiber 1 corresponds to the core portion. In addition, the fusion portion 5 is formed by once melting the sheath portion of the binder fiber 3 having a core-sheath structure by heating and then performing cooling. Further, as shown in Fig. 13, a fiber portion 16 is formed by the organic fiber 1 and the fusion portion 5 containing the inorganic particle 4, and a base material portion 18 containing an inorganic particle is formed between a plurality of fiber portions 16. In addition, when the melted sheath portion is cooled, adjacent organic fibers 1 are fused to each other in a contact portion 31 to form a three-dimensional framework.

In the heat insulation material 60 configured in this manner, since the organic fiber 1 and the fusion portion 5 act as a framework, an excellent strength and shape retention property can be obtained. In addition, since the fusion portion 5 covering the outer peripheral surface of the organic fiber fixes the inorganic particle 4 to the organic fiber 1 on both a surface side and a center side of the heat insulation material 60, the powder falling can be suppressed. Therefore, for example, even in the case where the heat transfer suppression member 50 including the heat insulation material 60 is disposed between a plurality of battery cells, and the battery cells expand to apply a compressive stress or impact to the heat transfer suppression member 50, an excellent heat insulation performance can be maintained.

Although a mechanism by which the falling off of the inorganic particle 4 (powder falling) can be suppressed in the heat insulation material 60 is not clear, it is thought that one of reasons is that deformation or compression of the heat insulation material 60 is suppressed since the organic fiber 1 and the fusion portion 5 form a three-dimensional and strong framework and the shape of the heat insulation material 60 is retained. In addition, when the elastic material 51 as shown in the second and third embodiments is stacked on at least one surface of the heat insulation material 60, it is thought that a pressure on the heat insulation material 60 is reduced and the falling off of the inorganic particle 4 can be further suppressed.

Note that, regardless of the presence or absence of the elastic material 51 on the surface of the heat insulation material 60, the fiber portion 16 exposed on the surface of the heat insulation material 60 can absorb an impact applied to the heat insulation material 60, which is also thought to be the reason why the inorganic particle 4 is retained. Further, in the present embodiment, since a thickness of the heat insulation material is formed to be smaller than that of the frame body 53, similar to the effect of the fiber portion 16, the impact applied to the heat insulation material can be absorbed, and the effect of retaining the inorganic particle 4 can be improved.

As shown in Fig. 13, in the heat insulation material 60, the fusion portion 5 does not need to completely cover the outer peripheral surface of the organic fiber 1, and the organic fiber 1 may be partially exposed. Since the binder fiber 3 having a core-sheath structure is used in the heat insulation material 60, the sheath portion may peel off during a process of producing the heat insulation material 60, and even in the case where the organic fiber 1 is partially exposed, the effects of the present invention can be sufficiently obtained.

### <Heat Insulation Material (Structure Example 4)>

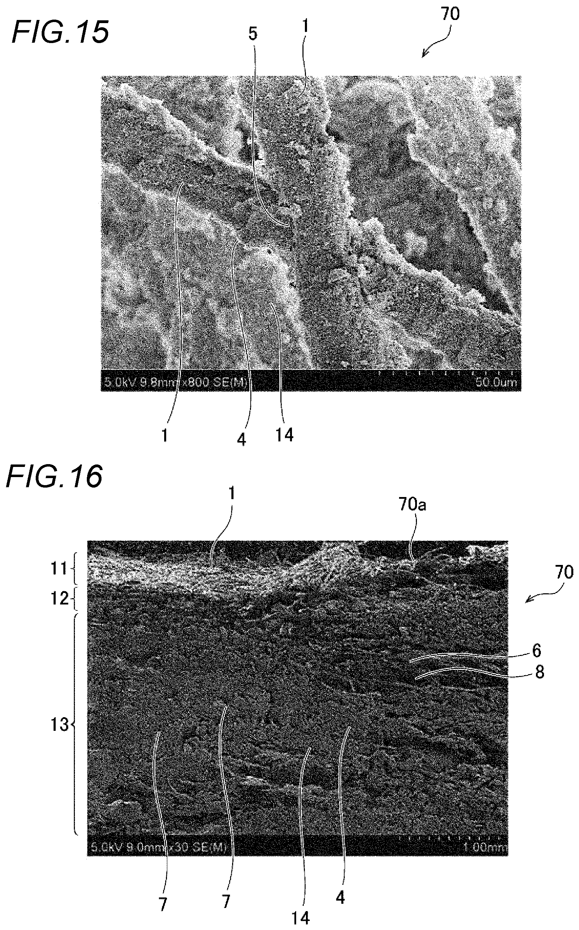

Fig. 14 is a photograph substituted for a drawing showing Structure Example 4 of the heat insulation material for use in the heat transfer suppression member according to the embodiment of the present invention. Fig. 15 is a photograph substituted for a drawing showing an enlarged structure of the heat insulation material shown in Fig. 14. Fig. 16 is a photograph substituted for a drawing showing a cross section of the heat insulation material shown in Fig. 14. In Structure Example 4 shown in Figs. 14 to 16, components same as those in Structure Example 1 shown in Figs. 8 and 9 are denoted by the same reference numerals, and detailed description thereof will be omitted. Note that, a heat insulation material 70 shown in Figs. 4 to 16 can be used as, for example, the heat insulation material 10 of the heat transfer suppression members 50, 120, and 130 shown in Figs. 1A, 1B, 3, and 4, or the first heat insulation material 10a and the second heat insulation material 10b of the heat transfer suppression members 140, 150, and 160 shown in Figs. 5A, 5B, 6, and 7.

As shown in Figs. 14 and 15, the heat insulation material 70 contains a matrix 14 containing the inorganic particle 4, and the organic fiber 1 three-dimensionally oriented in the matrix 14. The organic fiber 1 includes the fusion portion 5 covering at least a portion of a surface thereof, and the organic fibers 1 are fused to each other by the fusion portion 5. Similarly, the inorganic particle 4 is also fused to the surface of the organic fiber 1, and accordingly, the surface of the organic fiber 1 is covered with the inorganic particle 4.

In addition, as shown in the cross-sectional view in Fig. 16, a plurality of pores 7 are formed in the matrix 14 of the heat insulation material 70. Further, in the matrix 14, the organic fibers 1 are at least partially fused to each other by the fusion portion 5 (not shown in Fig. 16), to form the fiber bundle 6, and a void portion 8 is formed between a plurality of organic fibers 1 constituting the fiber bundle 6.

Further, the fiber layer 11 is formed on at least a portion of a first surface 70a and a second surface (not shown) of the heat insulation material 70 that are orthogonal to a thickness direction of the heat insulation material 70. The fiber layer 11 is formed in a layer shape on the surface (first surface and second surface) of the heat insulation material 70 by at least partially fusing the plurality of organic fibers 1 to each other by the fusion portion 5. In addition, a composite layer 12 is formed between the fiber layer 11 and the base layer 13 containing the matrix 14 and the organic fiber 1. The composite layer 12 is a layer in which a portion of the fiber layer 11 and a portion of the matrix 14 are mixed together. Specifically, the composite layer 12 is a region including a plurality of organic fibers 1 at least partially fused to each other by the fusion portion 5, and the inorganic particle 4 fused to the organic fiber 1 by the fusion portion 5.

Note that, the fiber bundle 6 is formed by entangling 10 or more organic fibers 1 with each other and partially fusing the organic fibers 1 to each other, and is disposed in any direction in the matrix 14 of the heat insulation material 70. On the other hand, the fiber layer 11 is a layer formed by gathering 10 or more organic fibers 1 on the surface of the heat insulation material 70, and extends in a direction substantially parallel to the surface, for example, in a stripe shape.

In the heat insulation material 70 configured in this manner, the organic fibers 1 are three-dimensionally oriented in the matrix 14, and the organic fiber 1 includes the fusion portion 5 covering at least a portion of the surface thereof. The "fusion portion 5" refers to a portion where the surface of the organic fiber 1 has melted and then solidified again, and is formed during a process of producing the heat insulation material 70. In the heat insulation material 70, since the three-dimensionally oriented organic fibers 1 are fused to each other by the fusion portion 5, this structure serves as a framework to support the shape of the heat insulation material 70 and to obtain a high strength.

Similarly, in the heat insulation material 70, since the fusion portion 5 on the outer peripheral surface of the organic fiber 1 also fixes the inorganic particle 4 to the organic fiber 1, an even higher powder falling suppression effect can be obtained. Therefore, for example, even in the case where a portion of the battery cells 20a, 20b, and 20c expands and a compressive stress or impact is applied to the heat transfer suppression member 50 during charging and discharging of the battery cells 20a, 20b, and 20c, the shape of the heat insulation material 70 can be retained by the effects of the fusion portion 5 and the frame body 53 in the present embodiment. As a result, it is possible to suppress falling off of the inorganic particle 4 (powder falling), and it is possible to prevent a decrease in heat insulation effect due to compressive deformation of the heat insulation material 70.

In the heat insulation material 70, a mechanism by which the falling off of the inorganic particle 4 from the sheet surface can be suppressed is thought to be the same as that of the heat insulation material 60 in Structure Example 3.

Note that, also in the heat insulation material 70, the fusion portion 5 does not need to completely cover the outer peripheral surface of the organic fiber 1, and there may be a region where the fusion portion 5 is not present. Even in such a case, the effect of retaining the inorganic particle 4 can be sufficiently obtained.

In addition, since the heat insulation material 70 contains the organic fiber 1 having high flexibility, the flexibility of the heat insulation material 70 can be improved, the organic fibers 1 are likely to be entangled with each other, and the effect of improving a sheet strength can be obtained.

Further, in the heat insulation material 70, since the matrix 14 has the plurality of pores 7 and the void portion 8 is provided between the plurality of organic fibers 1 constituting the fiber bundle 6, the heat insulation performance can be improved. In addition, due to the presence of the void portion 8, the organic fiber 1 is less likely to be restrained in the matrix 14, so that the flexibility and the strength of the heat insulation material 70 can be further improved. The void portion 8 does not need to be formed in the entire region between the plurality of organic fibers 1, and as long as the void portion 8 is formed at least partially between the organic fibers 1, a heat transfer suppression effect can be obtained. Note that, when the void portion 54 as shown in the first and third embodiments is provided on a main surface side of the heat insulation material, the heat transfer suppression effect can be further obtained.

Further, the heat insulation material 70 includes the fiber bundle 6 and the fiber layer 11, and therefore can have a much higher strength than the case where the organic fibers 1 are disposed in a dispersed manner. The fiber layer 11 is not simply disposed on the base layer 13, and the composite layer 12, in which a portion of the fiber layer 11 and a portion of the inorganic particle 4 constituting the matrix 14 are mixed together, is provided between the fiber layer 11 and the base layer 13, so that the fiber layer 11 is reliably restrained to the surface of the heat insulation material 70. Therefore, the heat insulation material 70 having a high strength can be obtained.

### <Heat Insulation Material (Structure Example 5)>

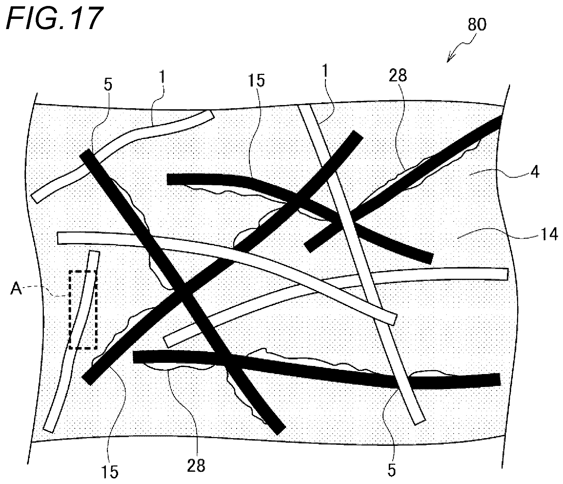

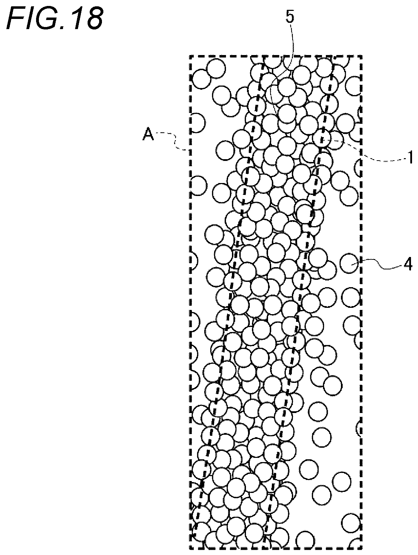

Fig. 17 is a schematic diagram showing Structure Example 5 of the heat insulation material for use in the heat transfer suppression member according to the embodiment of the present invention. Fig. 18 is a schematic diagram showing an enlarged view of a portion A of the heat insulation material shown in Fig. 17. In Structure Example 5 shown in Figs. 17 and 18, components same as those in Structure Example 1 of the heat insulation material shown in Figs. 8 and 9 are denoted by the same reference numerals, and detailed description thereof will be omitted. Note that, a heat insulation material 80 shown in Figs. 17 and 18 can be used as, for example, the heat insulation material 10 of the heat transfer suppression members 50, 120, and 130 shown in Figs. 1A, 1B, 3, and 4, or the first heat insulation material 10a and the second heat insulation material 10b of the heat transfer suppression members 140, 150, and 160 shown in Figs. 5A, 5B, 6, and 7.

As shown in Figs. 17 and 18, the heat insulation material 80 contains the matrix 14 containing the inorganic particle 4, the inorganic fiber 15 dispersed in the matrix 14, and the organic fiber 1. The organic fiber 1 and the inorganic fiber 15 are entangled with each other to form a three-dimensional web structure. Note that, in the present embodiment, an air layer 28 is formed in a portion of a periphery of the inorganic fiber 15. In addition, the organic fiber 1 includes the fusion portion 5 on a portion of the surface, and at least a portion of the inorganic fiber 15 is fused to the organic fiber 1 by the fusion portion 5. Further, at least a portion of the inorganic particle 4 is fused to the organic fiber 1 by the fusion portion 5.

Note that, in the present description, the inorganic fiber 15 being "dispersed" indicates a state where the inorganic fibers 15 are disposed to spread as a whole without being extremely unevenly distributed.

In the heat insulation material 80 configured in this manner, the organic fiber 1 and the inorganic fiber 15 are entangled with each other to form a three-dimensional web structure, and this structure serves as a framework, so that a high strength can be obtained. Therefore, even in the case where the heat transfer suppression member 50 is compressed due to expansion of the battery cells 20a, 20b, and 20c during charging and discharging of the battery cells 20a, 20b, and 20c, the shape of the heat insulation material 80 can be retained by the framework structure of the organic fiber 1 and the inorganic fiber 15 and the effect of the frame body 53. As a result, it is possible to suppress falling off of the inorganic particle 4 (powder falling), and it is possible to prevent a decrease in heat insulation effect due to compressive deformation of the heat insulation material 80.

In addition, since the heat insulation material 80 contains the organic fiber 1 having high flexibility, the flexibility of the heat insulation material 80 can be improved, the organic fiber 1 is entangled with the inorganic fiber 15 to easily form a three-dimensional web structure, and the strength can also be improved. In addition, when the heat insulation material 80 does not contain the inorganic fiber 15, for example, in the case where the battery cell 20a experiences thermal runaway and the heat transfer suppression member disposed adjacent to the battery cell 20a is exposed to a high temperature, even in the case where the organic fiber 1 is decomposed, the shape of the heat transfer suppression member can be retained. Therefore, since the heat insulation material 80 contains the organic fiber 1 having high flexibility and the inorganic fiber 15 that is not decomposed even at a high temperature, the heat transfer suppression member having both flexibility and a strength in a well-balanced manner can be obtained.

Further, in the present embodiment, the air layer 28 is provided around the inorganic fiber 15 disposed to be dispersed in the matrix 14. The inorganic fiber 15 has a thermal conductivity higher than that of the organic fiber 1, but as described above, since the air layer 28 is formed around the inorganic fiber 15, heat transfer between the inorganic fiber 15 and the matrix 14 can be suppressed. Note that, although the air layer 28 is formed in a process of producing the heat insulation material 80, the air layer 28 does not need to be formed entirely around the inorganic fiber 15, and the heat transfer suppression effect can be obtained as long as the air layer 28 is formed on at least a portion of an outer peripheral surface of the inorganic fiber 15.

When the inorganic fiber 15 is uniformly dispersed in the matrix 14, the air layer 28 in the matrix 14 is also disposed to be uniformly dispersed, and thus the heat insulation material 80 can obtain a high heat insulation property without unevenness. Note that, when the void portion 54 as shown in the first and third embodiments is provided on a main surface side of the heat insulation material, the heat insulation property can be further obtained.

Further, in the heat insulation material 80, the organic fiber 1 includes the fusion portion 5 covering at least a portion of the surface. The "fusion portion 5" refers to a portion where the surface of the organic fiber 1 has melted and then solidified again, and is formed during the process of producing the heat insulation material 80. When at least a portion of the inorganic fiber 15 is fused to the organic fiber 1 by the fusion portion 5, the organic fiber 1 and the inorganic fiber 15 entangled with each other are fixed, so that the heat insulation material 80 having an even higher strength can be obtained.

Similarly, in the present embodiment, since the fusion portion 5 on the outer peripheral surface of the organic fiber 1 also fixes the inorganic particle 4 to the organic fiber 1, an even higher powder falling suppression effect can be obtained. Therefore, for example, even in the case where a portion of the battery cells 20a, 20b, and 20c expands and a compressive stress or impact is applied to the heat transfer suppression member, an excellent heat insulation performance can be maintained.

In the present embodiment, as a mechanism by which the falling off of the inorganic particle 4 from the sheet surface can be suppressed, it is thought that the organic fiber 1 and the inorganic fiber 15 are fused to each other by the fusion portion 5 to form a three-dimensional and strong framework, the shape of the heat insulation material 80 is retained, and deformation or compression of the heat transfer suppression member is suppressed. In addition, it is thought that, regardless of the presence or absence of the elastic material 51 on the surface of the heat insulation material 80, when the organic fiber 1 or the inorganic fiber 15 is exposed on the surface of the heat insulation material 80, the impact applied to the heat insulation material 80 can be absorbed, and the inorganic particle 4 is retained.

Further, in the present embodiment, since a thickness of the heat insulation material is formed to be smaller than that of the frame body 53, similar to the effect of the fiber portion 16, the impact applied to the heat insulation material can be absorbed, and the effect of retaining the inorganic particle 4 can be improved.

Note that, also in the heat insulation material 80, the fusion portion 5 does not need to completely cover the outer peripheral surface of the organic fiber 1, and there may be a region where the fusion portion 5 is not present. Even in such a case, the effect of retaining the inorganic particle 4 can be sufficiently obtained.

### <Heat Insulation Material (Structure Example 6)>

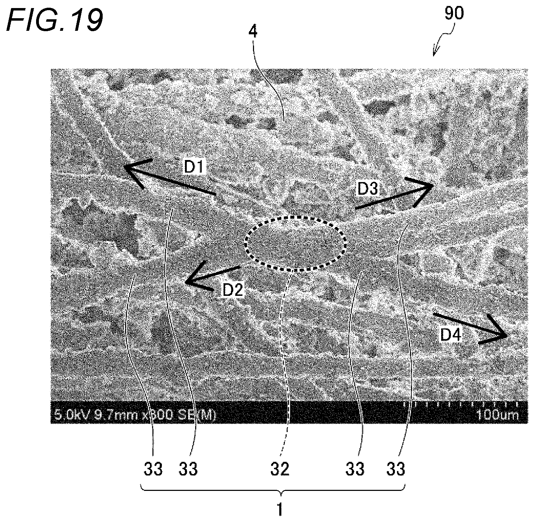

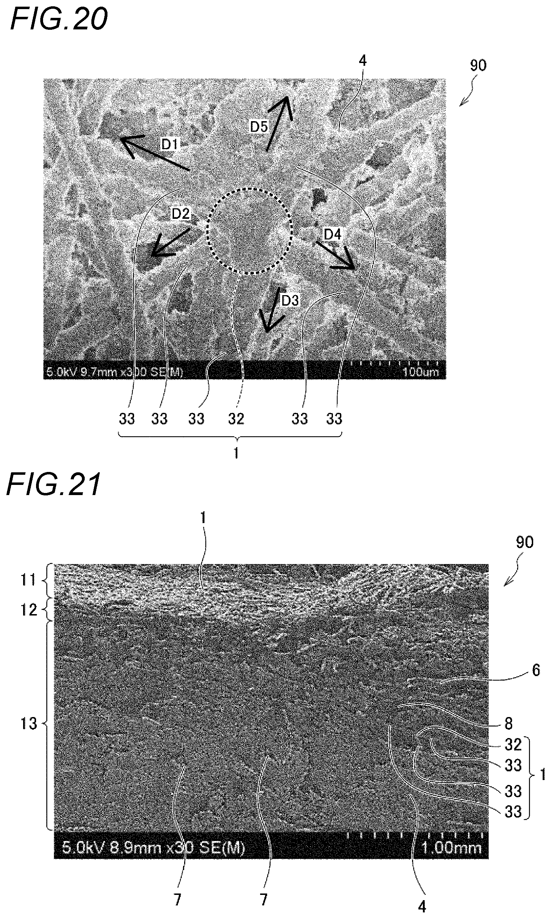

Fig. 19 is a photograph substituted for a drawing showing Structure Example 6 of the heat insulation material for use in the heat transfer suppression member according to the embodiment of the present invention. Fig. 20 is a photograph substituted for a drawing showing another region of the heat insulation material shown in Fig. 19. Fig. 21 is a photograph substituted for a drawing showing a cross section of the heat insulation material shown in Figs. 19 and 20. In Structure Example 6 shown in Figs. 19 to 21, components same as those in Structure Example 4 of the heat insulation material shown in Figs. 14 to 16 are denoted by the same reference numerals, and detailed description thereof will be omitted. Note that, a heat insulation material 90 shown in Figs. 19 to 21 can be used as, for example, the heat insulation material 10 of the heat transfer suppression members 50, 120, and 130 shown in Figs. 1A, 1B, 3, and 4, or the first heat insulation material 10a and the second heat insulation material 10b of the heat transfer suppression members 140, 150, and 160 shown in Figs. 5A, 5B, 6, and 7.

As shown in Fig. 19, the heat insulation material 90 contains the inorganic particle 4 and the organic fiber 1. In addition, at least some of organic fibers 1 have a branched structure including a base portion 32 and a branched portion 33 extending from the base portion 32. In the present embodiment, the branched portion 33 extends from the base portion 32 in four directions, i.e., a direction D1, a direction D2, a direction D3, and a direction D4. A framework is formed by the base portion 32 and a plurality of branched portions 33.

Another region of the heat insulation material 90 shown in Fig. 20 also includes the organic fiber 1 having a branched structure including the base portion 32 and the branched portion 33 extending from the base portion 32. Note that, the organic fiber 1 shown in Fig. 20 includes the base portion 32 and the branched portion 33 extending from the base portion 32 in five directions, that is, the direction D1, the direction D2, the direction D3, the direction D4, and a direction D5. The base portion 32 is thicker than the plurality of branched portions 33.

Further, as shown in Figs. 19 and 20, in the present embodiment, the inorganic particle 4 is fused to the surface of the organic fiber 1, and accordingly, the surface of the organic fiber 1 is covered with the inorganic particle 4.

In addition, as shown in the cross-sectional view in Fig. 21, the plurality of pores 7 are formed in the heat insulation material 90. Further, in the heat insulation material 90, the organic fibers 1 are at least partially fused to each other to form the fiber bundle 6, and the void portion 8 is formed between the organic fibers 1 constituting the fiber bundle 6. Note that, the organic fiber 1 having a branched structure including the base portion 32 and the branched portion 33 extending in three directions from the base portion 32 can be also be observed in Fig. 21.

Further, the fiber layer 11 may be formed on at least a portion of a first surface and a second surface of the heat insulation material 90 that are orthogonal to a thickness direction of the heat insulation material 90. The fiber layer 11 is formed in a layer shape on the surface (first surface and second surface) of the heat insulation material 90 by at least partially fusing the plurality of organic fibers 1 to each other. In addition, the composite layer 12 may be formed between the fiber layer 11 and the base layer 13 containing the inorganic particle 4 and the organic fiber 1. The composite layer 12 is a layer in which a portion of the fiber layer 11 and a portion of the inorganic particle 4 are mixed together. Specifically, the composite layer 12 is a region including a plurality of organic fibers 1 fused to each other and the inorganic particle 4 fused to the organic fiber 1.

Note that, the fiber bundle 6 is formed by entangling 10 or more organic fibers 1 with each other and partially fusing the organic fibers 1 to each other, and is disposed in any direction inside the heat insulation material 90. On the other hand, the fiber layer 11 is a layer formed by gathering 10 or more organic fibers 1 on the surface of the heat insulation material 90, and extends in a direction substantially parallel to the surface, for example, in a stripe shape.

In the heat insulation material 90 configured in this manner, since at least some of the organic fibers 1 have a branched structure including the base portion 32 and the branched portion 33, the organic fiber 1 serves as a framework and can retain the shape of the heat insulation material 90. In the present embodiment, the base portion 32 is formed by a fused portion in which the organic fibers 1 are fused to each other. Specifically, since the base portion 32 is a portion in which some of the plurality of organic fibers 1 are in contact with each other and melted and then solidified, the base portion 32 is thicker than the branched portion 33. Therefore, since the entire framework can be firmly supported by the base portion 32, the strength of the heat insulation material 90 can be remarkably improved.

In the heat insulation material 90, at least some of the organic fibers 1 have a branched structure including the base portion 32 and the branched portion 33 extending from the base portion 32 in at least three directions. The branched structure can also be checked in a cross-sectional photograph or the like of the heat insulation material 90. As a method of more easily checking the branched structure, a method of observing a cross section obtained by tearing the heat insulation material 90 in a plane direction orthogonal to the thickness direction thereof is exemplified. In this manner, by observing the cross section, it is possible to easily check the organic fiber 1 having a branched structure including the base portion 32 and the branched portion 33 extending from the base portion 32 in at least three directions. The base portion 32 and the branched portion 33 will be described in more detail below.

### (Base Portion (Fused Portion))

In the case of using a binder fiber having a core-sheath structure as a material for the heat insulation material 90, the fused portion is formed in a portion where a plurality of binder fibers are in contact with each other by once melting sheath portions of the binder fibers by heating and then cooling the sheath portions. When the binder fiber having a core-sheath structure is used as the material for the heat insulation material 90, the fused portion contains a second organic material constituting the sheath portion.

In this manner, in the process of producing the heat transfer suppression member 50, when the sheath portions in a region where the plurality of binder fibers are in contact with each other are melted by heating, the amount of the sheath portions (second organic material) to be melted is larger than that in the case of melting the sheath portion of one binder fiber, and a thick fused portion (base portion 32) is formed after cooling. As a result, the framework is more firmly supported by the base portion 32.

### (Branched Portion)

The branched portion 33 extends from the base portion 32 in at least three directions and has an effect of retaining the inorganic particle 4. In addition, since the framework is formed by the base portion 32 and the branched portion 33, the strength of the heat transfer suppression member 50 can be improved. Accordingly, a high powder falling suppression effect can be obtained.

In the case of using the binder fiber having a core-sheath structure as the organic fiber 1, the branched portion 33 is a portion of the binder fiber having a core-sheath structure, and includes a core portion composed of a first organic material and a sheath portion composed of a second organic material.

The branched portion 33 extending from the base portion 32 can form a framework composed of the organic fiber 1 as long as it extends in at least three directions. In addition, it is preferable that the plurality of branched portions 33 extend in three-dimensional directions different from each other, and accordingly, a three-dimensional and strong framework can be formed.

In the heat insulation material 90, since the plurality of branched portions 33 extend from the base portion 32, the inorganic particle 4 can be retained by the plurality of branched portions 33, and a high powder falling suppression effect can be obtained by a synergistic effect with the effect of improving the sheet strength by framework formation. Therefore, for example, even in the case where a portion of the battery cells 20a, 20b, and 20c expands and a compressive stress or impact is applied to the heat transfer suppression member during charging and discharging of the battery cells 20a, 20b, and 20c, the shape of the heat insulation material 90 can be retained by the framework structure of the heat insulation material 90 and the effect of the frame body 53 in the heat transfer suppression member. As a result, it is possible to suppress falling off of the inorganic particle 4 (powder falling), and it is possible to prevent a decrease in heat insulation effect due to compressive deformation of the heat insulation material 90.

A mechanism by which the falling off of the inorganic particle 4 from the surface of the heat insulation material 90 can be suppressed is thought to be the effect of retaining the inorganic particle 4 by the branched portion 33 in addition to the same effect as that in the heat insulation material 60 of Structure Example 3. Further, when the inorganic particle 4 is fused to the surface of the organic fiber 1, the organic fiber 1 appears to have a large fiber diameter, so that the strength is higher than the strength of only containing the organic fiber 1, and a high effect retaining the inorganic particle 4 can be obtained.

Note that, in the heat insulation material 90, there may be a region where the inorganic particle 4 is not partially fused to the outer peripheral surface of the organic fiber 1. Even in such a case, the effect of retaining the inorganic particle 4 can be sufficiently obtained.

In addition, since the heat insulation material 90 contains the organic fiber 1 having high flexibility, the flexibility of the heat insulation material 90 can be improved, the organic fibers 1 are likely to be entangled with each other, and the effect of improving the sheet strength can be obtained.

Further, it is preferable that the heat insulation material 90 has the plurality of pores 7 and the void portion 8 is provided between the plurality of organic fibers 1 constituting the fiber bundle 6, and accordingly, an air heat insulation effect can be obtained and the heat insulation performance can be improved. In addition, due to the presence of the void portion 8, the organic fiber 1 is in a state of not being completely restrained, so that the flexibility and the strength of the heat insulation material 90 can be further improved. The void portion 8 does not need to be formed in the entire region between the plurality of organic fibers 1, and as long as the void portion 8 is formed at least partially between the organic fibers 1, the heat transfer suppression effect can be obtained. Note that, when the void portion 54 as shown in the first and third embodiments is provided on a main surface side of the heat insulation material, the heat insulation property can be further obtained.

Further, the heat insulation material 90 includes the fiber bundle 6 and the fiber layer 11, and therefore can have a much higher sheet strength than the case where the organic fibers 1 are disposed in a dispersed manner. In addition, in the case where the fiber layer 11 is present, the fiber layer 11 is not simply disposed on the base layer 13, and the composite layer 12, in which a portion of the fiber layer 11 and a portion of the inorganic particle 4 are mixed together, is provided between the fiber layer 11 and the base layer 13, so that the fiber layer 11 is reliably restrained to the surface of the heat insulation material 90. Therefore, the strength of the heat insulation material 90 can be improved.

### <Heat Insulation Material (Structure Example 7)>

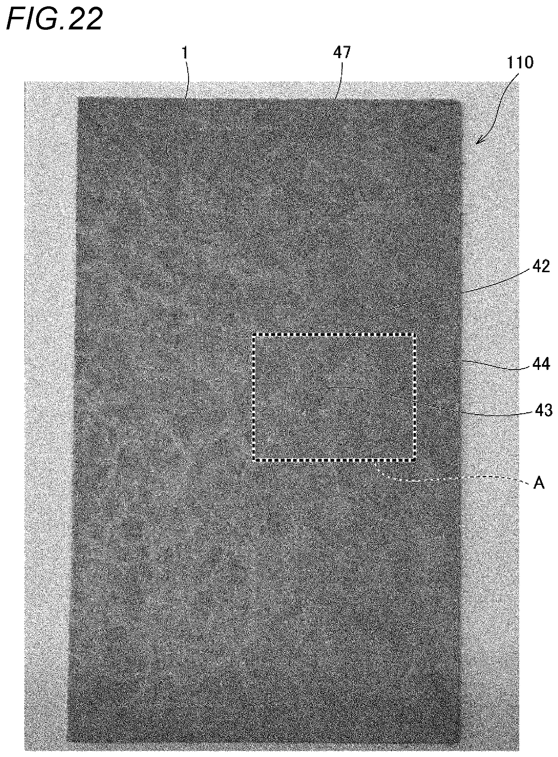

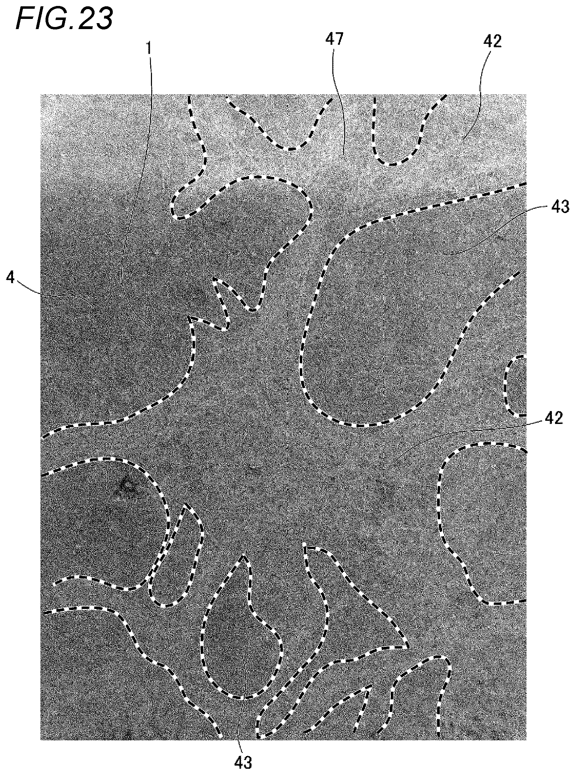

Fig. 22 is a photograph substituted for a drawing showing Structure Example 7 of the heat insulation material for use in the heat transfer suppression member according to the embodiment of the present invention. Fig. 23 is a photograph substituted for a drawing showing an enlarged view of a portion of the heat insulation material shown in Fig. 22. In Structure Example 7 shown in Figs. 22 and 23, components same as those in Structure Example 2 of the heat insulation material shown in Fig. 10 are denoted by the same reference numerals, and detailed description thereof will be omitted. Note that, a heat insulation material 110 shown in Figs. 22 and 23 can be used as, for example, the heat insulation material 10 of the heat transfer suppression members 50, 120, and 130 shown in Figs. 1A, 1B, 3, and 4, or the first heat insulation material 10a and the second heat insulation material 10b of the heat transfer suppression members 140, 150, and 160 shown in Figs. 5A, 5B, 6, and 7.

As shown in Figs. 22 and 23, the heat insulation material 110 contains the inorganic particle 4 and the organic fiber 1. A surface of the heat insulation material 110 includes a first region 42 having a stripe-like fiber bundle 47 composed of a plurality of organic fibers 1 and a second region 43 having no fiber bundle 47. In the present description, the "fiber bundle 47" is formed by entangling 10 or more organic fibers 1 with each other, and extends in a stripe shape in a direction substantially parallel to the surface of the heat insulation material 110.

That is, in the case of observing the surface of the heat insulation material 110, as shown in Fig. 23, it is observed that the plurality of organic fibers 1 are entangled in the first region 42. On the other hand, in the second region 43, although several organic fibers 1 are observed in some places, no fiber bundle 47 formed by entangling the plurality of organic fibers 1 is observed.

Note that, in the present embodiment, the first region 42 and the second region 43 have a sea-island structure, and the second region 43 corresponding to an island portion is formed to be surrounded by the first region 42 corresponding to a sea portion.

In the heat insulation material 110, since the fiber bundle 47 formed by entangling the plurality of organic fibers 1 is present to extend in a stripe shape on the surface of the heat insulation material 110, the strength of the heat insulation material 110 can be improved. In addition, since the entire surface is not covered with the fiber bundle 47, and there is the first region 42 having the fiber bundle 47 and the second region having no fiber bundle 47, the flexibility of the heat insulation material 110 is also excellent. Further, in the present embodiment, the heat insulation material is formed to have a thickness smaller than that of the frame body, and the fiber bundle 47 is present on the surface of the heat insulation material 110. Therefore, even in the case where an impact or a pressure is applied to the heat insulation material 110, the void portion on a main surface side of the heat insulation material as shown in the first and third embodiments or the elastic material 51 as shown in the second embodiment, and the fiber bundle 47 can absorb and relax the impact or the pressing force. Therefore, the falling off of the inorganic particle 4 (powder falling) can be suppressed, and a decrease in heat insulation performance of the heat transfer suppression member can be prevented.

Note that, in the heat insulation material 110, the organic fiber 1 and the fiber bundle 47 formed by entangling the organic fibers 1 are present not only on the surface of the heat insulation material 110 but also inside the heat insulation material 110. Accordingly, a more excellent strength can be obtained.

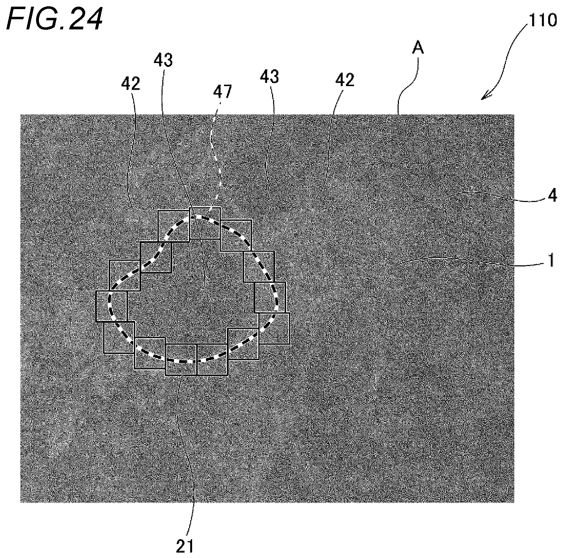

A length of the fiber bundle 47 formed to extend on the surface of the heat insulation material 110 is preferably long to some extent. An example of a method of defining the length of the fiber bundle 47 will be described with reference to Fig. 24.

As shown in Fig. 24, on the surface of the heat insulation material 110, rectangular virtual frames 21 are disposed along the fiber bundle 47 extending in a stripe shape. In the present embodiment, the virtual frame 21 has a size of 5 mm square, and the virtual frames 21 are disposed to be continuous with each other. At this time, when there is a fiber bundle 47 passing through at least three continuous virtual frames 21, it can be determined that the effect of improving the strength of the heat insulation material 110 is sufficient.

It is also possible to simply measure the length of the fiber bundle 47 extending in a stripe shape. For example, use can be composed of a method in which a string or the like is disposed on the surface of the heat insulation material 110 along the fiber bundle 47 and then the length of the string is measured. In the case of measuring the length of the continuous fiber bundle 47, when there is a fiber bundle 47 having a length of 20 mm or more, the effect of improving the strength of the heat insulation material 110 can be sufficiently obtained.

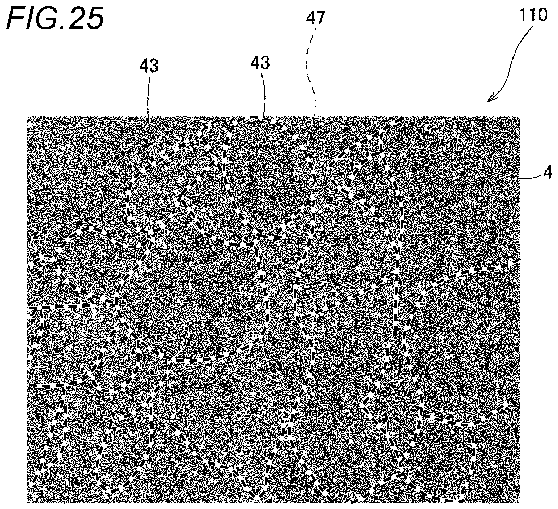

Further, as shown in Fig. 25, when the fiber bundle 47 is interconnected in a mesh shape on the surface of the heat insulation material 110, the sheet strength can be further improved.

Hereinafter, the materials constituting the heat insulation materials of Structure Example 1 to Structure Example 7, the preferred contents thereof, and the like will be described in more detail.

### <Organic Fiber>

The organic fiber 1 imparts the flexibility to the heat insulation material, and, by fusing the inorganic particle 4 and other organic fibers 1 to the surface thereof, has the effect of retaining the strength and the shape of the sheet. A single-component organic fiber may be used as a material for the organic fiber 1 in the heat insulation material, and it is preferable to use a binder fiber having a core-sheath structure. The binder fiber having a core-sheath structure includes a core portion extending in a longitudinal direction of the fiber, and a sheath portion formed to cover an outer peripheral surface of the core portion. In addition, the core portion is composed of a first organic material, the sheath portion is composed of a second organic material, and a melting point of the first organic material is higher than a melting point of the second organic material. In the case where the binder fiber having a core-sheath structure is used as the material, the core portion corresponds to the organic fiber 1 in the above heat insulation material. During the production of the heat insulation material, the second organic material constituting the sheath portion is melted and then solidified again, so that the sheath portion becomes the fusion portion 5 in the heat insulation material.

In the case where the binder fiber having a core-sheath structure is used as the material for the organic fiber 1, the core portion, i.e., the first organic material constituting the organic fiber 1, is not particularly limited as long as it has a melting point higher than that of the sheath portion, i.e., the second organic material, present on the outer peripheral surface of the organic fiber 1. Examples of the first organic material include at least one kind selected from a polyethylene terephthalate, a polypropylene, and nylon.

### (Content of Organic Fiber)

In the present embodiment, when a content of the organic fiber 1 in the heat insulation material is appropriately controlled, a sufficient framework reinforcement effect can be obtained.

The content of the organic fiber 1 is preferably 2 mass% or more, and more preferably 4 mass% or more, with respect to a total mass of the heat insulation material. When the content of the organic fiber 1 is too large, a content of the inorganic particle 4 decreases relatively. Therefore, in order to obtain a desired heat insulation performance, the content of the organic fiber is preferably 10 mass% or less, and more preferably 8 mass% or less, with respect to the total mass of the heat insulation material.

### (Fiber Length of Organic Fiber)

A fiber length of the organic fiber 1 is not particularly limited, and from the viewpoint of ensuring moldability and processability, an average fiber length of the organic fiber is preferably 10 mm or less.

On the other hand, from the viewpoint of making the organic fiber 1 function as a framework and ensuring a compressive strength of the heat insulation material, the average fiber length of the organic fiber 1 is preferably 0.5 mm or more.

### <Fusion Portion>

The fusion portion 5 is formed by heating and melting the surface of the organic fiber 1 or the sheath portion of the binder fiber having a core-sheath structure, and then cooling the same, and fuses the inorganic particle 4 to the surface of the organic fiber 1 and fuses the organic fibers 1 to each other. In the case where the binder fiber having a core-sheath structure is used as the material for the organic fiber 1, the fusion portion 5 contains the second organic material constituting the sheath portion.

### (Second Organic Material)

The second organic material is not particularly limited as long as it has a melting point lower than that of the first organic material constituting the organic fiber 1. Examples of the second organic material include at least one kind selected from a polyethylene terephthalate, a polyethylene, a polypropylene, and nylon.

Note that, the melting point of the second organic material is preferably 90°C or higher, and more preferably 100°C or higher. In addition, the melting point of the second organic material is preferably 150°C or lower, and more preferably 130°C or lower.

### <Inorganic Particle>

As the inorganic particle, a single kind of inorganic particle may be used, or two or more kinds of inorganic particles may be used in combination. From the viewpoint of the heat transfer suppression effect, as the kind of the inorganic particle, a particle composed of at least one kind of inorganic material selected from an oxide particle, a carbide particle, a nitride particle, and an inorganic hydrate particle is preferably used, and more preferably an oxide particle is used. The form thereof is not particularly limited. It is preferable to contain at least one kind selected from a nanoparticle, a hollow particle, and a porous particle. Specifically, a silica nanoparticle, a metal oxide particle, an inorganic balloon such as a microporous particle or a hollow silica particle, a particle composed of a thermally expandable inorganic material, a particle composed of a hydrous porous material, or the like can also be used.

When an average secondary particle diameter of the inorganic particle is 0.01 µm or more, the inorganic particle is easily available and an increase in production cost can be suppressed. When the average secondary particle diameter is 200 µm or less, a desired heat insulation effect can be obtained. Therefore, the average secondary particle diameter of the inorganic particle is preferably 0.01 µm or more and 200 µm or less, and more preferably 0.05 µm or more and 100 µm or less.

Note that, when two or more kinds of inorganic particles having different heat transfer suppression effects are combined, a heating element can be cooled in multiple stages and a heat absorption effect can be exhibited over a wider temperature range. Specifically, it is preferable to use a large-diameter particle and a small-diameter particle in combination. For example, in the case of using a nanoparticle as one of the inorganic particle, it is preferable to contain an inorganic particle composed of a metal oxide as the other inorganic particle. Hereinafter, the inorganic particle will be described in more detail, with the small-diameter inorganic particle as a first inorganic particle and the large-diameter inorganic particle as a second inorganic particle.

### <First Inorganic Particle>

### (Oxide Particle)

The oxide particle has a high refractive index and has a high effect of diffusely reflecting light, so that when the oxide particle is used as the first inorganic particle, radiant heat transfer can be suppressed, particularly in a high temperature range with abnormal heat generation or the like. As the oxide particle, at least one kind of particle selected from silica, titania, zirconia, zircon, barium titanate, zinc oxide, and alumina can be used. That is, among the above oxide particles that can be used as the inorganic particle, only one kind or two or more kinds of oxide particles may be used. Particularly, silica is a component having a high heat insulation property, and titania is a component having a high refractive index compared to other metal oxides, and has a high effect of diffusely reflecting light and blocking radiant heat in a high temperature range of 500°C or higher. Therefore, silica and titania are most preferably used as the oxide particle.

### (Average primary particle diameter of oxide particle: 0.001 µm or more and 50 µm or less)

Since the particle diameter of the oxide particle may influence an effect of reflecting radiant heat, when an average primary particle diameter thereof is limited to a predetermined range, an even higher heat insulation property can be obtained.

That is, when the average primary particle diameter of the oxide particle is 0.001 µm or more, a wavelength thereof is sufficiently larger than a wavelength of light that contributes to heating, and it diffusely reflects the light efficiently. Therefore, in a high temperature range of 500°C or higher, the radiant heat transfer of heat within the heat insulation material can be suppressed, and the heat insulation property can be further improved.

On the other hand, when the average primary particle diameter of the oxide particle is 50 µm or less, even with compression, the number of contact points between the particles does not increase, and it is difficult to form a conductive heat transfer path. Therefore, the influence on the heat insulation property particularly in a normal temperature range where the conductive heat transfer is dominant can be reduced.

Note that, in the present invention, the average primary particle diameter can be determined by observing particles with a microscope, comparing the particles with a standard scale, and taking an average of any 10 particles.

### (Nanoparticle)

In the present invention, the "nanoparticle" refers to a nanometer-order particle having a spherical or nearly spherical shape and having an average primary particle diameter of less than 1 µm. The nanoparticle has a low density and thus suppresses the conductive heat transfer, and when the nanoparticle is used as the first inorganic particle, the three-dimensionally connected pores 7 are much finer, so that an excellent heat insulation property of suppressing convective heat transfer can be obtained. Therefore, it is preferable to use a nanoparticle since it can suppress the conduction of heat between adj acent nanoparticles during normal use of a battery in a normal temperature range.

Further, when a nanoparticle having a small average primary particle diameter is used as the oxide particle, even in the case where the heat insulation material is compressed by expansion due to thermal runaway of the battery cell and the internal density increases, an increase in conductive heat transfer of the heat insulation material can be suppressed. This is thought to be because the nanoparticle tends to form fine voids between particles due to a repulsive force caused by static electricity, and the bulk density thereof is low, so that the particle is used for filling so as to provide a cushioning property.

Note that, in the present invention, in the case of using the nanoparticle as the first inorganic particle, the kind thereof is not particularly limited as long as the above definition of nanoparticle is met. For example, since a silica nanoparticle is a material having a high heat insulation property and has a few contact points between particles, the amount of heat conducted by the silica nanoparticle is smaller than that in a case of using a silica particle having a large particle diameter. In addition, since a generally available silica nanoparticle has a bulk density of about 0.1 (g/cm³), for example, even in the case where battery cells disposed on both sides of the heat insulation material thermally expand and a large compressive stress is applied to the heat insulation material, the size (area) or the number of contact points between silica nanoparticles does not increase remarkably, and the heat insulation property can be maintained. Therefore, it is preferable to use a silica nanoparticle as the nanoparticle. Examples of the silica nanoparticle include wet silica, dry silica, and aerogel. A silica nanoparticle that is particularly suitable for the present embodiment will be described below.

Generally, the particles of wet silica are agglomerated, whereas the particles of dry silica can be dispersed. Since the conductive heat transfer is dominant in heat conduction in a temperature range of 300°C or lower, the dry silica in which particles can be dispersed can provide a more excellent heat insulation performance than the wet silica.

Note that, the heat insulation material according to the present embodiment is preferably produced by a production method in which a mixture containing materials is processed into a sheet shape by a dry method. Therefore, as the inorganic particle, it is preferable to use dry silica or silica aerogel which has a low thermal conductivity.

### (Average primary particle diameter of nanoparticle: 1 nm or more and 100 nm or less)

When the average primary particle diameter of the nanoparticle is limited to a predetermined range, an even higher heat insulation property can be obtained.

That is, when the average primary particle diameter of the nanoparticle is 1 nm or more and 100 nm or less, the convective heat transfer and the conductive heat transfer of the heat within the heat insulation material can be suppressed particularly in a temperature range of lower than 500°C, and the heat insulation property can be further improved. In addition, even in the case where a compressive stress is applied, voids remaining between the nanoparticles and contact points between many particles can suppress the conductive heat transfer, and the heat insulation property of the heat insulation material can be maintained.

Note that, the average primary particle diameter of the nanoparticle is more preferably 2 nm or more, and still more preferably 3 nm or more. On the other hand, the average primary particle diameter of the nanoparticle is more preferably 50 nm or less, and still more preferably 10 nm or less.

### (Inorganic Hydrate Particle)

The inorganic hydrate particle exhibits a so-called "heat absorption effect" that the inorganic hydrate particle receives heat from the heating element, thermally decomposes when reaching a thermal decomposition start temperature or higher, releases crystal water thereof, and lowers the temperature of the heating element and surroundings. The inorganic hydrate particle forms a porous material after releasing the crystal water, and exhibits a heat insulation effect due to countless air pores thereof.

Specific examples of the inorganic hydrate include aluminum hydroxide (Al(OH)₃), magnesium hydroxide (Mg(OH)₂), calcium hydroxide (Ca(OH)₂), zinc hydroxide (Zn(OH)₂), iron hydroxide (Fe(OH)₂), manganese hydroxide (Mn(OH)₂), zirconium hydroxide (Zr(OH)₂), and gallium hydroxide (Ga(OH)₃).

For example, aluminum hydroxide has about 35% crystal water, and as shown in the following formula, thermally decomposes to release the crystal water and exhibits a heat absorption effect. Then, after releasing the crystal water, aluminum hydroxide forms alumina (Al₂O₃), which is a porous material, and functions as a heat insulation material.

2Al(OH)₃ → Al₂O₃ + 3H₂O

Note that, the heat transfer suppression member 50 according to the present embodiment is preferably interposed between, for example, battery cells, but in a battery cell that has experienced thermal runaway, the temperature rapidly rises to over 200°C and continues to rise to about 700°C. Therefore, it is preferable that the inorganic particle is composed of an inorganic hydrate whose thermal decomposition start temperature is 200°C or higher.

The thermal decomposition start temperature of the above inorganic hydrates is about 200°C for aluminum hydroxide, is about 330°C for magnesium hydroxide, is about 580°C for calcium hydroxide, is about 200°C for zinc hydroxide, is about 350°C for iron hydroxide, is about 300°C for manganese hydroxide, is about 300°C for zirconium hydroxide, and is about 300°C for gallium hydroxide. All of these almost overlap the temperature range of the rapid temperature rise of a battery cell that has experienced thermal runaway, and can effectively prevent the temperature rise. Therefore, these are preferred inorganic hydrates.

### (Average secondary particle diameter of inorganic hydrate particle: 0.01 µm or more and 200 µm or less)

In the case of using the inorganic hydrate particle as the first inorganic particle, when the average particle diameter thereof is too large, it takes a certain amount of time for the first inorganic particle (inorganic hydrate) near the center of the heat insulation material to reach the thermal decomposition temperature thereof, so that the first inorganic particle near the center of the sheet may not be completely thermally decomposed. Therefore, the average secondary particle diameter of the inorganic hydrate particle is preferably 0.01 µm or more and 200 µm or less, and more preferably 0.05 µm or more and 100 µm or less.

### (Particle Composed of Thermally Expandable Inorganic Material)

Examples of the thermally expandable inorganic material include vermiculite, bentonite, mica, and perlite.

### (Particle Composed of Hydrous Porous Material)

Specific examples of the hydrous porous material include zeolite, kaolinite, montmorillonite, acid clay, diatomaceous earth, wet silica, dry silica, aerogel, mica, and vermiculite.

### (Inorganic Balloon)

A heat insulation material used in the present invention may contain an inorganic balloon as the first inorganic particle.

When the inorganic balloon is contained, the convective heat transfer or the conductive heat transfer of the heat within the heat insulation material can be suppressed in a temperature range of lower than 500°C, and the heat insulation property of the heat insulation material can be further improved.

As the inorganic balloon, at least one kind selected from a whitebait balloon, a silica balloon, a fly ash balloon, a perlite balloon, and a glass balloon can be used.

### (Content of inorganic balloon: 60 mass% or less with respect to total mass of heat insulation material)

A content of the inorganic balloon is preferably 60 mass% or less with respect to the total mass of the heat insulation material.

### (Average particle diameter of inorganic balloon: 1 µm or more and 100 µm or less)

An average particle diameter of the inorganic balloon is preferably 1 µm or more and 100 µm or less.

### <Second Inorganic Particle>

In the case where the heat insulation material contains two kinds of inorganic particles, the second inorganic particle is not particularly limited as long as it is different from the first inorganic particle in material, particle diameter, or the like. As the second inorganic particle, an oxide particle, a carbide particle, a nitride particle, an inorganic hydrate particle, a silica nanoparticle, a metal oxide particle, an inorganic balloon such as a microporous particle or a hollow silica particle, a particle composed of a thermally expandable inorganic material, a particle composed of a hydrous porous material, or the like can be used. Details of these are as described above.

Note that, the nanoparticle has extremely low conductive heat transfer, and can maintain an excellent heat insulation property even in the case where a compressive stress is applied to the heat insulation material. In addition, a metal oxide particle such as titania has a high effect of blocking radiant heat. Further, when a large-diameter inorganic particle and a small-diameter inorganic particle are used, the small-diameter inorganic particle enters gaps between the large-diameter inorganic particles, leading to a more dense structure, and the heat transfer suppression effect can be improved. Therefore, in the case of using, for example, a nanoparticle as the first inorganic particle, it is preferable that the heat insulation material further contains, as the second inorganic particle, a particle composed of a metal oxide having a diameter larger than that of the first inorganic particle.

Examples of the metal oxide include silicon oxide, titanium oxide, aluminum oxide, barium titanate, zinc oxide, zircon, and zirconium oxide. Particularly, titanium oxide (titania) is a component having a high refractive index compared to other metal oxides, and has a high effect of diffusely reflecting light and blocking the radiant heat in a high temperature range of 500°C or higher. Therefore, titania is most preferably used.

In the case where at least one kind of particle selected from a dry silica particle and silica aerogel is used as the first inorganic particle, and at least one kind of particle selected from titania, zircon, zirconia, silicon carbide, zinc oxide, and alumina is used as the second inorganic particle, in order to obtain an excellent heat insulation performance within a temperature range of 300°C or lower, the content of the first inorganic particle is preferably 50 mass% or more, more preferably 60 mass% or more, and still more preferably 70 mass% or more, with respect to a total mass of the inorganic particles. In addition, the content of the first inorganic particle is preferably 95 mass% or less, more preferably 90 mass% or less, and still more preferably 80 mass% or less, with respect to the total mass of the inorganic particles.

On the other hand, in order to obtain an excellent heat insulation performance within a temperature range of higher than 300°C, the content of the second inorganic particle is preferably 5 mass% or more, more preferably 10 mass% or more, and still more preferably 20 mass% or more, with respect to the total mass of the inorganic particles. In addition, the content of the second inorganic particle is preferably 50 mass% or less, more preferably 40 mass% or less, and still more preferably 30 mass% or less, with respect to the total mass of the inorganic particles.

### (Average primary particle diameter of second inorganic particle)

In the case where the second inorganic particle composed of a metal oxide is contained in the heat insulation material, when an average primary particle diameter of the second inorganic particle is 1 µm or more and 50 µm or less, the radiant heat transfer can be efficiently suppressed in a high temperature range of 500°C or higher. The average primary particle diameter of the second inorganic particle is more preferably 5 µm or more and 30 µm or less, and most preferably 10 µm or less.

### (Content of Inorganic Particle)

In the present embodiment, when a total content of the inorganic particles 4 in the heat insulation material is appropriately controlled, a sufficient heat insulation property can be ensured in the heat insulation material.

The total content of the inorganic particles 4 is preferably 60 mass% or more, and more preferably 70 mass% or more with respect to the total mass of the heat insulation material. When the total content of the inorganic particles 4 is too large, the content of the organic fiber decreases relatively. Therefore, in order to obtain a sufficient framework reinforcement effect and inorganic particle retention effect, the total content of the inorganic particles 4 is preferably 95 mass% or less, and more preferably 90 mass% or less, with respect to the total mass of the heat insulation material.

Note that, the content of the inorganic particles 4 in the heat insulation material can be calculated, for example, by heating the heat insulation material at 800°C, decomposing organic components, and then measuring the mass of the remaining portion.

### <Inorganic Fiber>

As the inorganic fiber 15, a single kind of inorganic fiber may be used, or two or more kinds of inorganic fibers may be used in combination. Examples of the inorganic fiber include ceramic-based fibers such as a silica fiber, an alumina fiber, an alumina silicate fiber, a zirconia fiber, a carbon fiber, a soluble fiber, a refractory ceramic fiber, an aerogel composite, a magnesium silicate fiber, an alkaline earth silicate fiber, a potassium titanate fiber, a silicon carbide fiber, and a potassium titanate whisker fiber, glass-based fibers such as a glass fiber, glass wool, and slag wool, mineral-based fibers other than these fibers, such as rock wool, a basalt fiber, a mullite fiber, and natural mineral-based fibers such as wollastonite as mineral-based fibers other than those listed above.

These inorganic fibers are preferred in terms of heat resistance, strength, easy availability, and the like. Among the inorganic fibers, a silica-alumina fiber, an alumina fiber, a silica fiber, rock wool, an alkaline earth silicate fiber, and a glass fiber are particularly preferred from the viewpoint of the handleability.

The cross-sectional shape of the inorganic fiber is not particularly limited, and examples thereof include a circular cross section, a flat cross section, a hollow cross section, a polygonal cross section, and a core cross section. Among them, an irregular cross-section fiber having a hollow cross section, a flat cross section, or a polygonal cross section can be preferably used since the heat insulation property is slightly improved.

The lower limit of an average fiber length of the inorganic fiber is preferably 0.1 mm, and the lower limit is more preferably 0.5 mm. On the other hand, the upper limit of the average fiber length of the inorganic fiber is preferably 50 mm, and the upper limit is more preferably 10 mm. When the average fiber length of the inorganic fiber is less than 0.1 mm, the inorganic fibers are unlikely to be entangled with each other, and a mechanical strength of the heat insulation material may decrease. On the other hand, when the average fiber length is more than 50 mm, a reinforcement effect can be obtained, but the inorganic fibers may not be able to entangle tightly with each other, or a single inorganic fiber may curl up, making continuous voids more likely to occur, and thus there is a risk that the heat insulation property decreases.

The lower limit of an average fiber diameter of the inorganic fiber is preferably 1 µm, the lower limit is more preferably 2 µm, and the lower limit is still more preferably 3 µm. On the other hand, the upper limit of the average fiber diameter of the inorganic fiber is preferably 15 µm, and the upper limit is more preferably 10 µm. When the average fiber diameter of the inorganic fiber is less than 1 µm, the mechanical strength of the inorganic fiber may decrease. In addition, from the viewpoint of the influence on human health, the average fiber diameter of the inorganic fiber is preferably 3 µm or more. On the other hand, when the average fiber diameter of the inorganic fiber is larger than 15 µm, solid heat transfer using the inorganic fiber as a medium may increase, resulting in a decrease in heat insulation property, and the moldability and the strength of the heat insulation material may deteriorate.

### (Content of Inorganic fiber)

In the present embodiment, in the case where the heat insulation material contains an inorganic fiber, a content of the inorganic fiber is preferably 3 mass% or more and 15 mass% or less with respect to the total mass of the heat insulation material.

In addition, the content of the inorganic fiber is preferably 5 mass% or more and 10 mass% or less with respect to the total mass of the heat insulation material. With such contents, a shape retention property, pressing force resistance, wind pressure resistance, and an ability to retain the inorganic particle of the inorganic fiber are exhibited in a well-balanced manner. In addition, when the content of the inorganic fiber is appropriately controlled, the organic fiber 1 and the inorganic fiber are entangled with each other to form a three-dimensional network, so that an effect of retaining the inorganic particle 4 and other blending materials to be described later can be further improved.

### <Other Blending Materials>

Note that, the heat insulation material according to the present embodiment can further contain a binding material, a colorant, and the like, if necessary. All of these are useful for reinforcing the heat insulation material and improving the moldability, and a total amount thereof is preferably 10 mass% or less with respect to the total mass of the heat insulation material.

Although Structure Example 1 to Structure Example 7 of the heat insulation material have been described above, the structure of the heat insulation material containing the inorganic particle and the organic fiber is not limited thereto, and heat insulation materials having various structures can be used. In particular, the heat insulation materials of Structure Example 1 to Structure Example 7 have a more excellent heat insulation effect than other heat insulation materials or a heat insulation material containing a fiber and aerogel.

Here, a result of comparing heat insulation effects using various heat insulation materials having different kinds and thicknesses will be described. A heat insulation effect test can be performed by installing a heater in contact with one main surface of the heat insulation material, installing a thermometer on the other main surface, and measuring a temperature change of the other main surface when the temperature of the heater is raised. When the temperature of the heater is raised to 800°C, the temperature of the other main surface of the heat insulation material reaches the maximum temperature after a certain time elapses. At this time, it can be seen that the heat insulation material having a low maximum temperature has a more excellent heat insulation property. The comparison results of the heat insulation effects are shown in Table 1 below.

### [Table 1]

**Table 1**

| Heat insulation material No. | Kind | Thickness (mm) | Maximum temperature (°C) |
|---|---|---|---|
| Heat insulation material A-1 | Heat insulation material of Structure Example 3 | 2.0 | About 190 |
| Heat insulation material A-2 | Heat insulation material of Structure Example 3 | 3.0 | About 150 |
| Heat insulation material B | Heat insulation material containing fiber and aerogel | 4.5 | About 190 |

In Table 1 above, heat insulation materials A-1 and A-2 are heat insulation materials of Structure Example 3 shown in Figs. 11 to 13, and are obtained by molding the organic fiber having a core-sheath structure and the inorganic particle into a sheet shape by a dry method. In the heat insulation materials A-1 and A-2, as the organic fiber, an organic fiber having a core-sheath structure in which the core portion and the sheath portion are composed of a polyethylene terephthalate and the melting points of both are different by 90°C or more is used, and as the inorganic particle, a silica nanoparticle and titania are used. The heat insulation material B is impregnated with SiO₂ having a fiber as a framework.

As shown in Table 1, it is shown that the heat insulation performance of heat insulation material A-1 having a thickness of 2.0 mm is equal to the heat insulation performance of heat insulation material B having a thickness of 4.5 mm. In addition, when the thickness of the heat insulation material A-2, that is, the heat insulation material is further increased, a heat insulation performance higher than that of the heat insulation material B can be obtained with a thickness smaller than that of the heat insulation material B.

These results are not limited to those in Structure Example 3, and the same heat insulation performance can be obtained in all the heat insulation materials of Structure Example 1 to Structure Example 7. Therefore, when the heat insulation materials of Structure Example 1 to Structure Example 7 containing the inorganic particle and the organic fiber are used, the thickness of the heat insulation material can be easily made smaller than that of the frame body 53, and thus the heat insulation material can be suitably used as the heat insulation material of the heat transfer suppression member according to the embodiment of the present invention.

Further, in the heat transfer suppression member according to the present embodiment, constituent materials other than the frame body, the partition wall, and the heat insulation material will be described below.

### <Film>

In the case where the heat transfer suppression member includes the film 52 as shown in the first to third embodiments, as a material constituting the film 52, at least one kind selected from a polyethylene, a polypropylene, a polystyrene, vinyl chloride, nylon, acrylic, an epoxy resin, a polyurethane, a polyether ether ketone, a polyetherimide, a polyethylene terephthalate, a polytetrafluoroethylene (PTFE), a polyphenyl sulfide, a polycarbonate, and an aramid can be selected.

Note that, in the case where only the heat insulation material is covered with the film, and in the case where the heat insulation material and the frame body, or the entire surface of the stacked body and the frame body is covered with the film 52, shrink packaging may be used. Examples of a material suitable for the shrink packaging include a polyethylene, a polypropylene, a polystyrene, a polyethylene terephthalate, and vinyl chloride.

### (Thickness of Film)

The film preferably has an appropriate thickness since it has an effect of preventing particles and the like from falling off from the heat insulation material and preventing the heat insulation material from falling off from the frame body 53. In addition, the film preferably has appropriate flexibility. When the thickness of the film is more than 1 mm, the film is likely to be cracked or broken. Therefore, the thickness of the film is preferably 1 mm or less, more preferably 0.1 mm or less, and still more preferably 0.05 mm or less.

On the other hand, the thickness of the film is not particularly limited in lower limit, and is preferably 0.005 mm or more, and more preferably 0.01 mm or more in order to prevent the film from being easily broken due to friction with a battery cell or the like and to obtain a desired strength.

### (Other Materials Contained in Film)

Since the film is required to have resistance to the battery cells 20a, 20b, and 20c at a high temperature, the film preferably has flame retardancy, and specifically, the film preferably contains an inorganic substance or a flame retardant. As the other materials constituting the film, examples of the inorganic substance include talc, calcium carbonate, aluminum hydroxide, titanium oxide, vermiculite, zeolite, synthetic silica, zirconia, zircon, barium titanate, zinc oxide, and alumina, and examples of the flame retardant include a bromine-based flame retardant, a chlorine-based flame retardant, a phosphorus-based flame retardant, a boron-based flame retardant, a silicone-based flame retardant, and a nitrogen-containing compound.

### <Elastic Material>

The elastic material is obtained by processing a material having elasticity into a sheet shape. As shown in the second and third embodiments, when the heat transfer suppression member includes the elastic material 51, a known material having elasticity can be used as the material having elasticity constituting the elastic material 51. Specifically, it is possible to use a sheet formed of a rubber or a thermoplastic elastomer having elasticity that flexibly deforms with respect to deformation of the battery cells 20a, 20b, and 20c.

The rubber may be either a synthetic rubber or a natural rubber, and examples of the synthetic rubber include a styrene butadiene rubber, a butadiene rubber, a chloroprene rubber, an isoprene rubber, a butyl rubber, an ethylene propylene rubber, a nitrile rubber, a silicone rubber, a fluoro rubber, an acrylic rubber, a urethane rubber, a polysulfide rubber, an epichlorohydrin rubber, and a silicone foam.

Examples of the thermoplastic elastomer include polystyrene-based, polyolefin-based, vinyl chloride-based, polyurethane-based, polyester-based, polyamide-based, and polybutadiene-based thermoplastic elastomers. The elastomer may be either porous or nonporous. Note that, in the case of being porous, the cell structure may be either a closed-cell type or an open-cell type.

### (Size of Elastic Material)

The thickness of the elastic material is not particularly limited, and is preferably 1 mm or more and 10 mm or less in order to effectively obtain the effect of the elastic material.

### [Method for Producing Heat Transfer Suppression Member]

In a method for producing the heat transfer suppression member according to the present embodiment, in particular, an example in which the heat insulation material 40 of Structure Example 2 shown in Fig. 10 is applied to the heat transfer suppression member 130 according to the third embodiment will be described in detail below.

### <Production of Heat Insulation Material>

For example, a binder fiber (not shown) having a core-sheath structure, the inorganic particle 4, and the inorganic fiber 15 are charged into a mixer such as a V-type mixer at a predetermined ratio to prepare a mixture.

Note that, as described above, the binder fiber is preferably a fiber having a core-sheath structure, which includes a core portion composed of the first organic material and a sheath portion composed of the second organic material. In this case, the melting point of the first organic material is higher than the melting point of the second organic material.

Thereafter, the obtained mixture is charged into a predetermined mold and pressurized with a pressing machine or the like, and the obtained molded body is heated to melt the sheath portion of the binder fiber. Thereafter, the heated molded body is cooled, whereby the second organic material constituting the molten sheath portion and the inorganic particle 4 present around the binder fiber are fused to the core portion (organic fiber 1), and are also fused to each other in a region where the binder fibers are in contact with each other. Accordingly, the heat insulation material 40 processed into a sheet shape having a thickness smaller than that of the frame body can be obtained.

Note that, the heat insulation material containing no inorganic fiber 15 can also be produced in the same manner as the heat insulation material 40, and the use of the inorganic fiber 15 can be freely selected.

Note that, when the above materials of the heat insulation material are mixed, pressurized, and heated, the entangled organic fibers 1 exposed on the surface are heated to be formed as the fiber layer 11 on the surface of the heat insulation material 40. The fiber layer 11 obtained in this manner improves the strength of the heat insulation material 40 and also has an effect of relaxing an impact on the surface of the heat insulation material 40.

### <Assembly of Stacked Body>

Thereafter, the elastic material 51 is disposed on the main surface of the heat insulation material 40, and the elastic material 51 and the heat insulation material 40 are fixed each other. A method of fixing the heat insulation material 40 and the elastic material 51 to each other is not particularly limited, and various methods such as a method of bonding the both with an adhesive or the like, a method of sewing the both with a thread or the like, a method of sandwiching and fixing the both with a fixing jig, a method of covering the both with a film or the like, and a method of covering the both with a thermally compressible film and then heating to shrink the film to fix the both can be used. Note that, the elastic material 51 does not necessarily have to be stacked, and only a heat insulation material may be used as shown in the first embodiment.

### <Production of Frame Body>

In addition, the frame body 53 surrounding the outer periphery of the heat insulation material is produced. As a material for the frame body 53, for example, a resin can be used, and may be integrally molded, or may be produced by combining a plurality of frame members. As shown in the fourth embodiment shown in Figs. 5A and 5B and the modifications thereof, in the case where the heat transfer suppression member includes a partition wall, the frame body and the partition wall may be integrally molded or may be produced by combining a plurality of members.

### <Assembly of Stacked Body into Frame Body>

Thereafter, the heat insulation material is fitted and fixed to the frame body 53. A method of fixing the heat insulation material to the frame body 53 is not particularly limited, and the heat insulation material may be fixed to the frame body 53 using a fixing material such as an adhesive, or a groove or the like may be processed in the frame body 53 and the heat insulation material may be fixed to be fitted into the groove.

### <Attachment of Film>

Thereafter, two films 52 having substantially the same size as an outer diameter of the frame body 53 in a planar view are prepared, the films 52 are superimposed on the frame body 53, and the frame body 53 and the film 52 are thermally fused to each other. In this manner, the film 52 may be thermally fused to the frame body 53, may cover and completely wrap the frame body 53 and the heat insulation material, or may cover and wrap only the heat insulation material. As shown in the fourth embodiment, the film 52 may not be disposed.

Note that, the outer diameter of the frame body 53 and the size of the film 52 being "substantially the same" means that a difference in size between the frame body 53 and the film 52 is allowable up to ±5%, preferably ±3%, and more preferably ±1% of an average value of the outer diameter of the frame body 53 and the size of the film 52.

The above heat insulation material is preferably produced by a dry method. In the case of using a dry method, the inorganic particle 4 used is suitable for the dry method, and a solvent such as water, which is necessary for molding in a wet method, is not added to the mixture. However, during the production of the heat insulation material, in order to prevent a powder such as the inorganic particle 4 from flying around and prevent raw materials from being difficult to handle, a small amount of a solvent such as water can also be added within the range of the dry method. For example, by adding a small amount of a solvent such as water to the mixture, scattering of the inorganic particle during the production can be suppressed.

Next, the preferred binder fiber, heating conditions, and other binder materials used in the production of the above heat insulation material will be described.

### <Binder Fiber>

**In** the case of using the binder fiber 3 having a core-sheath structure as the material for the heat insulation material, the binder fiber 3 is not particularly limited as long as the melting point of the first organic material constituting the core portion is higher than the melting point of the second organic material constituting the sheath portion. As the first organic material constituting the core portion, at least one kind selected from a polyethylene terephthalate, a polypropylene, and nylon can be selected. **In** addition, as the second organic material constituting the sheath portion, at least one kind selected from a polyethylene terephthalate, a polyethylene, a polypropylene, and nylon can be selected.

When the melting point of the first organic material constituting the core portion is sufficiently higher than the melting point of the second organic material constituting the sheath portion, a setting tolerance of the heating temperature in a heating step can be expanded, and temperature setting for obtaining a desired structure can be made easier. For example, the melting point of the first organic material is preferably 60°C or more higher, more preferably 70°C or more higher, and still more preferably 80°C or more higher than the melting point of the second organic material.

Note that, the binder fiber 3 having a core-sheath structure as described above is generally commercially available, and the materials constituting the core portion and the sheath portion may be the same as or different from each other. Examples of the binder fiber in which the core portion and the sheath portion are composed of the same material having different melting points include one in which the core portion and the sheath portion are composed of a polyethylene terephthalate, one in which the core portion and the sheath portion are composed of a polypropylene, and one in which the core portion and the sheath portion are composed of nylon. Examples of the binder fiber in which the core portion and the sheath portion are composed of different materials include one in which the core portion is composed of a polyethylene terephthalate and the sheath portion is composed of a polyethylene, and one in which the core portion is composed of a polypropylene and the sheath portion is composed of a polyethylene.

In the present embodiment, the melting point of the second organic material constituting the sheath portion of the binder fiber 3 refers to a melting temperature at which the second organic material begins to undergo melting deformation, and softening accompanied by a change in shape is also considered to be a kind of melting deformation. The melting point of the sheath portion of the binder fiber can be measured, for example, by the following method.

A binder fiber to be measured is disposed in contact with a glass fiber having a higher melting point, heated from room temperature to, for example, 200°C at a heating rate of 5°C/min, and thereafter cooled to room temperature. At this time, when the surface of the binder fiber undergoes melting deformation and is fused at a portion in contact with the glass fiber, or the cross-sectional shape of the binder fiber changes, it can be determined that the melting point of the second organic material constituting the sheath portion is 200°C or lower. In the present embodiment, when the heating temperature is changed variously, and the fusion state of the binder fiber and the glass fiber after cooling by the above method or the cross-sectional shape of the binder fiber is observed, the melting point of the second organic material constituting the sheath portion can be determined.

### (Content of Binder Fiber)

In the case of using the binder fiber 3 having a core-sheath structure as the material for the heat insulation material, when a content of the binder fiber in the mixture is appropriately controlled, a sufficient framework reinforcement effect can be obtained in the obtained heat insulation material.

The content of the binder fiber 3 is preferably 5 mass% or more, and more preferably 10 mass% or more, with respect to a total mass of the mixture. When the content of the binder fiber 3 is too large, the content of the inorganic particle 4 decreases relatively. Therefore, in order to obtain a desired heat insulation performance, the content of the binder fiber 3 is preferably 25 mass% or less, and more preferably 20 mass% or less, with respect to the total mass of the mixture.

### (Hot Melt Powder)

In the present embodiment, in addition to the binder fiber 3 and the inorganic particle 4, the mixture may contain a hot melt powder as the binder material. The hot melt powder is a powder that contains, for example, a third organic material different from the first organic material and the second organic material, and has a property of being melted by heating. By containing the hot melt powder in the mixture and heating the same, when the hot melt powder is cooled after melting, the hot melt powder, including the surrounding inorganic particle 4, hardens. Therefore, the falling off of the inorganic particle 4 from the heat insulation material can be further suppressed.

Examples of the hot melt powder include those having various melting points, and it is sufficient to select a hot melt powder having an appropriate melting point in consideration of the melting points of the core portion and the sheath portion of the binder fibers used. Specifically, when the third organic material, which is a component constituting the hot melt powder, has a melting point lower than that of the first organic material constituting the organic fiber, the heating temperature can be set to melt the sheath portion and the hot melt powder while the core portion remains. For example, when the melting point of the hot melt powder is equal to or lower than the melting point of the sheath portion, it is sufficient to set the heating temperature during the production between the melting point of the core portion and the melting point of the sheath portion, so that the heating temperature can be set much more easily.

On the other hand, the kind of the hot melt powder to be used can also be selected such that the melting point of the hot melt powder is between the melting point of the core portion and the melting point of the sheath portion. In the case of using the hot melt powder having such a melting point, when both the sheath portion and the hot melt powder are cooled and harden after melting, the organic fiber (core portion) 1 and the surrounding molten sheath portion, and the hot melt powder present in gaps in the inorganic particle 4 firstly harden. As a result, the position of the organic fiber 1 can be fixed, and thereafter the molten sheath portion is fused to the organic fiber, making it easier to form a three-dimensional framework. Therefore, the strength of the entire sheet can be further improved.

When the melting point of the third organic material constituting the hot melt powder is sufficiently lower than the melting point of the first organic material constituting the core portion, a setting tolerance of the heating temperature in the heating step can be expanded, and temperature setting for obtaining a desired structure can be made easier. For example, the melting point of the first organic material is preferably 60°C or more higher, more preferably 70°C or more higher, and still more preferably 80°C or more higher than the melting point of the third organic material.

Note that, the melting point of the hot melt powder (third organic material) is preferably 80°C or higher, and more preferably 90°C or higher. In addition, the melting point of the hot melt powder (third organic material) is preferably 180°C or lower, and more preferably 150°C or lower. Examples of the component constituting the hot melt powder include a polyethylene, a polyester, a polyamide, and ethylene vinyl acetate.

### (Content of Hot Melt Powder)

In the case where the hot melt powder is contained in the mixture in order to suppress the falling off of the inorganic particle, the powder falling suppression effect can be obtained even when the content thereof is very small. Therefore, the content of the hot melt powder is preferably 0.5 mass% or more, and more preferably 1 mass% or more, with respect to the total mass of the mixture.

On the other hand, when the content of the hot melt powder is increased, the content of the inorganic particle 4 or the like decreases relatively. Therefore, in order to obtain a desired heat insulation performance, the content of the hot melt powder is preferably 5 mass% or less, and more preferably 4 mass% or less, with respect to the total mass of the mixture.

### <Heating Conditions>

In the case of using the binder fiber having a core-sheath structure as the material for the heat insulation material, the heating temperature in the heating step is preferably a temperature higher than the melting point of the second organic material constituting the sheath portion and lower than the melting point of the first organic material constituting the core portion. By setting the heating temperature like this, as described above, the strength of the sheet can be ensured by the core portion both on the surface side and the center side of the sheet, and the inorganic particle 4 can be retained by the fusion portion 5.

Specifically, the heating temperature in the heating step is set to preferably 10°C or more higher, and more preferably 20°C or more higher than the melting point of the second organic material constituting the sheath portion. On the other hand, the heating temperature is set to preferably 10°C or more lower, and more preferably 20°C or more lower than the melting point of the first organic material constituting the core portion.

A heating time is not particularly limited, and it is preferable to set a heating time that allows the sheath portion to be sufficiently melted. For example, it can be set to 3 minutes or longer and 15 minutes or shorter.

In the case where the hot melt powder is contained as the material for the heat insulation material, the heating temperature in the heating step is set to preferably 10°C or more higher, and more preferably 20°C or more higher than the higher one of the melting point of the second organic material constituting the sheath portion and the melting point of the third organic material constituting the hot melt powder. On the other hand, the heating temperature is set to preferably 10°C or more lower, and more preferably 20°C or more lower than the melting point of the first organic material constituting the core portion. By setting the heating temperature like this, a strong framework can be formed, the strength of the sheet can be further improved, and the falling off of the inorganic particle 4 can be prevented by the fusion portion 5 and the like.

### <Thickness of Heat Insulation Material>

In the present embodiment, the thickness of the heat insulation material is not particularly limited as long as it is smaller than the thickness of the frame body, and is preferably 0.05 mm or more and 10 mm or less. When the thickness is 0.05 mm or more, a sufficient compressive strength can be obtained. On the other hand, when the thickness is 10 mm or less, a good heat insulation property of the heat transfer suppression member can be obtained.

### [Battery Pack]

An example of a battery pack to which the heat transfer suppression member 50 according to the first embodiment of the present invention is applied is as shown in Fig. 2 above. Here, a configuration and effects of the battery pack will be specifically described with reference to Fig. 2. Note that, as described above, the heat transfer suppression member 50 shown in Fig. 2 can be replaced with a heat transfer suppression member having another structure within the scope of the present invention, in addition to the heat transfer suppression members 120, 130, 140, 150, and 160 having another structure. As the heat insulation material, in addition to the heat insulation materials 10, 40, 60, 70, 80, 90 and 110 having the above various structures, other heat insulation materials can be used within the scope of the present invention.

As shown in Fig. 2, the battery pack 100 includes the plurality of battery cells 20a, 20b, and 20c, and the heat transfer suppression member 50 according to the present embodiment, and the plurality of battery cells are connected in series or in parallel. For example, the heat transfer suppression member 50 according to the present embodiment is interposed between the battery cell 20a and the battery cell 20b and between the battery cell 20b and the battery cell 20c. Further, the battery cells 20a, 20b, and 20c and the heat transfer suppression member 50 are housed in the battery case 30.

Note that, the heat transfer suppression member 50 is as described above.

In the battery pack 100 configured in this manner, since the heat transfer suppression member includes the frame body, it is possible to ensure the interval between the battery cells. In addition, since the heat insulation material is formed to be thinner than the frame body, when the battery cells 20a, 20b, and 20c are deformed, it is possible to suppress the breakage of the battery case and the decrease in battery performance, and it is possible to suppress the propagation of heat between the battery cells at an abnormal state.

Note that, the battery pack 100 according to the present embodiment is not limited to the battery pack shown in Fig. 2. For example, the heat transfer suppression member 50 may be disposed not only between the battery cell 20a and the battery cell 20b and between the battery cell 20b and the battery cell 20c, but also between the battery cells 20a, 20b, and 20c and the battery case 30, or may be pasted to an inner surface of the battery case 30.

In the battery pack 100 configured in this manner, in the case where a certain battery cell ignites, it is possible to suppress the flame from spreading to the outside of the battery case 30. For example, the battery pack 100 according to the present embodiment is used in an electric vehicle (EV) or the like, and is sometimes disposed under a passenger's floor. In this case, even when the battery cell ignites, the safety of the passenger can be ensured.

In addition, since the heat transfer suppression member 50 can be disposed not only between the battery cells but also between the battery cells 20a, 20b, and 20c and the battery case 30, it is not necessary to newly prepare a flame retardant material or the like, and a safe battery pack 100 can be easily formed at a low cost.

Note that, the heat transfer suppression member according to the present embodiment can be produced into various shapes depending on the production method. Therefore, it is not influenced by the shapes of the battery cells 20a, 20b, and 20c and the battery case 30, and can be adapted to any shape. Specifically, it can be applied to cylindrical batteries, flat batteries, and the like, in addition to prismatic batteries.

Although various embodiments have been described above with reference to the drawings, it is needless to say that the present invention is not limited to such examples. It is apparent to those skilled in the art that various changes and modifications can be conceived within the scope of the claims, and it is understood that such changes and modifications are also encompassed within the technical scope of the present invention. In addition, the constituent elements in the above embodiments may be freely combined without departing from the gist of the present invention.

Note that, the present application is based on a Japanese patent application (Japanese Patent Application No. 2023-124841) filed on July 31, 2023, and the contents thereof are incorporated herein by reference.

### REFERENCE SIGNS LIST

1 organic fiber
3 binder fiber
8, 54 void portion
10, 40, 60, 70, 80, 90, 110 heat insulation material
10a first heat insulation material
10b second heat insulation material
20a, 20b, 20c battery cell
30 battery case
50, 120, 130, 140, 150, 160 heat transfer suppression member
51 elastic material
52, 112, 312 film
53 frame body
53a, 53b frame member
58a, 58b, 58c, 58d partition wall
100 battery pack

## Claims

1. A heat transfer suppression member comprising:
a frame body surrounding an outer periphery in a planar view; and
a sheet-shaped heat insulation material disposed in an inside of the frame body and having a pair of main surfaces, wherein
a thickness of the heat insulation material is smaller than a thickness of the frame body in a section view orthogonal to the planar view.

2. The heat transfer suppression member according to claim 1, further comprising:
a film covering the main surfaces of the heat insulation material.

3. The heat transfer suppression member according to claim 2, wherein a void portion is provided between at least one main surface of the pair of main surfaces and the film.

4. The heat transfer suppression member according to claim 1, further comprising:
an elastic material stacked on at least one main surface of the pair of main surfaces of the heat insulation material, wherein
a thickness of a stacked body of the heat insulation material and the elastic material is substantially same as the thickness of the frame body or smaller than the thickness of the frame body in the section view.

5. The heat transfer suppression member according to claim 4, wherein
the stacked body has a pair of outer main surfaces orthogonal to a thickness direction, and
the heat transfer suppression member comprises a film covering the pair of outer main surfaces.

6. The heat transfer suppression member according to claim 5, wherein a void portion is provided between at least one outer main surface of the pair of outer main surfaces and the film.

7. The heat transfer suppression member according to claim 4, wherein the elastic material comprises at least one kind selected from a synthetic rubber, a natural rubber, and a thermoplastic elastomer.

8. The heat transfer suppression member according to claim 1, further comprising:
a partition wall configured to divide the inside of the frame body into a plurality of regions; and
a plurality of the heat insulation materials disposed in the plurality of regions.

9. The heat transfer suppression member according to claim 8, wherein the plurality of heat insulation materials include a first heat insulation material and a second heat insulation material, each having mutually different properties.

10. The heat transfer suppression member according to claim 9, wherein an elastic modulus of the first heat insulation material is smaller than an elastic modulus of the second heat insulation material.

11. The heat transfer suppression member according to claim 10, wherein the first heat insulation material is disposed in at least a central region of the plurality of regions.

12. The heat transfer suppression member according to claim 8, wherein in the planar view, a width of the partition wall in a direction orthogonal to a longitudinal direction is smaller than a width of the frame body in a direction orthogonal to a longitudinal direction.

13. The heat transfer suppression member according to any one of claims 8 to 12, wherein the partition wall comprises an insulating material as a main material.

14. The heat transfer suppression member according to any one of claims 1 to 12, wherein the frame body comprises an insulating material as a main material.

15. The heat transfer suppression member according to any one of claims 1 to 12, wherein the heat insulation material comprises an inorganic particle and an organic fiber.

16. A battery pack comprising:
a plurality of battery cells; and
the heat transfer suppression member according to any one of claims 1 to 12, wherein
the plurality of battery cells are connected in series or in parallel.
